(19) Europäisches Patentamt European Patent Office Office européen des brevets

(11) **EP 4 371 373 B1**

(12) **EUROPEAN PATENT SPECIFICATION**

(45) Date of publication and mention of the grant of the patent:
**04.06.2025 Bulletin 2025/23**

(21) Application number: **22750804.1**

(22) Date of filing: **11.07.2022**

(51) International Patent Classification (IPC):
*H05B 6/06* (2006.01)     *A24F 40/465* (2020.01)
*A24F 40/57* (2020.01)

(52) Cooperative Patent Classification (CPC):
**H05B 6/06; A24F 40/465; A24F 40/57;** A24F 40/20;
H05B 2206/023

(86) International application number:
**PCT/EP2022/069352**

(87) International publication number:
**WO 2023/285401 (19.01.2023 Gazette 2023/03)**

(54) **AN INDUCTIVE HEATING ARRANGEMENT AND A METHOD FOR CONTROLLING A TEMPERATURE OF AN INDUCTIVE HEATING ARRANGEMENT**

INDUKTIVE HEIZUNGSANORDNUNG UND VERFAHREN ZUR TEMPERATURREGELUNG EINER INDUKTIVEN HEIZUNGSANORDNUNG

AGENCEMENT DE CHAUFFAGE INDUCTIF ET PROCÉDÉ DE RÉGULATION DE LA TEMPÉRATURE D'UN AGENCEMENT DE CHAUFFAGE INDUCTIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2021 EP 21185061**

(43) Date of publication of application:
**22.05.2024 Bulletin 2024/21**

(73) Proprietor: **Philip Morris Products S.A.**
**2000 Neuchâtel (CH)**

(72) Inventors:
• **BUTIN, Yannick**
  **2000 Neuchâtel (CH)**
• **CHATEAU, Maxime Clément Charles**
  **2000 Neuchâtel (CH)**

(74) Representative: **Reddie & Grose LLP**
**The White Chapel Building**
**10 Whitechapel High Street**
**London E1 8QS (GB)**

(56) References cited:
EP-A1- 3 841 899     US-A1- 2019 069 599
US-A1- 2020 154 787     US-B2- 10 470 496
US-B2- 9 713 345

**Description**

The present disclosure relates to an inductive heating arrangement and a method for controlling a temperature of an inductive heating arrangement. In particular, the disclosure relates to an aerosol-generating system comprising an inductive heating arrangement and a method of controlling the inductive heating arrangement in an aerosol-generating system to prevent overheating.

A growing number of aerosol-generating systems, such as e-cigarettes and heated tobacco systems, comprise an inductive heating arrangement that is configured to heat an aerosol-forming substrate to produce an aerosol. Inductive heating arrangements typically comprise an inductor that inductively couples to a susceptor. The inductor generates an alternating magnetic field that causes heating in the susceptor. Typically, the susceptor is in direct contact with the aerosol-forming substrate and heat is transferred from the susceptor to the aerosol-forming substrate primarily by conduction. The temperature of the susceptor must be controlled in order to provide for optimal aerosol generation, both in terms of the amount of aerosol generated and in terms of its composition.

US 2019/069599 A1 discloses a method for controlling power applied to a resistive heater of a vaporization device by measuring the resistance of the resistive heater at discrete intervals. Changes in resistance during heating are used to control the power applied to heat the resistive heater during operation. The vaporization device is configured to measure the resistance of the resistive heater during heating and to control the application of power to the resistive heater based on resistive values. The vaporization device may adjust the applied power by setting the applied power duty cycle based on the difference between the resistance of the resistive heater and a target resistance of the resistive heater.

EP 3 841 899 A1 discloses a temperature control method for an electronic cigarette comprising a heating element, with a resistance value, configured to be heated when a voltage is applied. The method comprises steps of: acquiring a preset maximum duty cycle as the initial duty cycle or determine the initial duty cycle according to the current parameters of the electronic cigarette; adjusting the voltage of a battery according to the initial duty cycle and outputting same to a heating element so that the heating element warms up; acquiring a temperature parameter for characterizing the temperature of the heating element; and when the temperature parameter of the heating element meets a preset temperature control condition, adjusting the duty cycle according to the temperature parameter of the heating element so that the heating element retains its temperature.

US 10 470 496 B2 discloses a method and system for controlling heating in an aerosol-generating system including an electrical heater, the method including comparing a measured parameter, indicative of the temperature of the heater, with a target value for the measured parameter; preventing a supply of power to the heater for a first time period if the measured parameter exceeds the target value by greater than or equal to a first amount; and preventing the supply of power to the heater for a second time period, shorter than the first time period, if the measured parameter exceeds the target value by less than the first amount.

US 9 713 345 B2 discloses a method of controlling an electrical heating element, including maintaining a temperature of the heating element at a target temperature by supplying pulses of electrical current to the heating element; monitoring a duty cycle of the pulses of electrical current; and determining if the duty cycle differs from an expected duty cycle or range of duty cycles, and if so, reducing the target temperature, or stopping the supply of current to the heating element or limiting the duty cycle of the pulses of electrical current supplied to the heating element.

US 2020/154787 A1 discloses an aerosol delivery device comprising a power source, a heating element, a switch coupled to and between the power source and heating element, and processing circuitry coupled to the switch. The processing circuitry outputs a pulse of known current to the heating element, and measure voltage across the heating element, between adjacent pulses of the PWM signal. And the processing circuitry calculates the resistance of the heating element based on the known current and the voltage, calculates the temperature of the heating element based on the resistance, and adjusts a duty cycle of the PWM signal when the temperature deviates from a predetermined target. An embodiment of a suitable heating element is an induction heater.

In most inductively heated aerosol-generating devices, vapour generated by the heating of the aerosol-forming substrate is carried away from the susceptor by an airflow. The vapour cools in the airflow to generate the aerosol. In some aerosol-generating devices, in which the aerosol is intended for inhalation, the airflow may be generated by a user puffing on the device. A user puffing on the device provides an intermittent and irregular airflow past the susceptor. This airflow past the susceptor cools the susceptor. So, during operation, more power must be provided to the inductor to counteract the cooling effect of the airflow and ensure optimal aerosol generation. The additional power must be provided as a response to a detected user puff.

Therefore, it is important for such aerosol-generating devices to accurately monitor and control the temperature of the susceptor to ensure optimum generation and delivery of an aerosol to a user and to be able to respond to cooling events, such as a user puffing on the device.

Inductive heating arrangements provide contactless heating of a susceptor. This is beneficial in many circumstances, in particular when the susceptor is provided in a separate component of the system to the inductor. For the same reason, it is desirable to monitor and control susceptor temperature without requiring direct electrical connection to the susceptor and without requiring a separate, dedicated temperature sensor. An apparent resistance or an apparent conductance of the susceptor within an inductive circuit can be monitored to provide an indication of susceptor temperature. The power supplied to the inductor can then be controlled to provide a desired susceptor temperature.

However, there are circumstances in which the relationship between apparent resistance or apparent conductance and temperature may change. In those circumstances, simply relying on apparent resistance or apparent conductance to provide an indication of susceptor temperature does not eliminate the possibility of overheating occurring. One such circumstance is a cooling flow of air over the susceptor.

It would desirable to provide a inductive heating arrangement and control method that reduces the possibility of overheating of an inductively heated susceptor, particularly during a user puff or other cooling event.

According to an embodiment of the invention, there is provided a method of controlling an inductive heating arrangement. The inductive heating system may comprise an inductor and a susceptor, the susceptor coupled to the inductor so that the provision of an alternating electrical current to the inductor causes heating of the susceptor.

The method may comprise:

providing pulses of electrical current to the at least one inductor to maintain a conductance or resistance associated with the susceptor at a target conductance or resistance;
detecting a cooling event associated with the susceptor;
determining a maximum duty cycle limit for the pulses of electrical current for a duration of the cooling event; and
increasing a duty cycle of the pulses of electrical current for the duration of the detected cooling event, to compensate for the detected cooling event, to a duty cycle at or below the maximum duty cycle limit. The maximum duty cycle limit may be less than 100%. The maximum duty cycle limit may be no greater than 95%.

Experiments have shown that a cooling event associated with a susceptor, such as a cooling flow of air over the susceptor, can change the relationship between the conductance of the susceptor and the temperature of the susceptor. In particular, a cooling airflow across the susceptor can reduce the conductance of the susceptor at and close to its Curie temperature. In a system which operates close to a Curie temperature of material in the susceptor, and which uses a correlation between an apparent resistance or conductance of the susceptor and the temperature of the susceptor established in the absence of a cooling airflow to control susceptor temperature, this can lead to an inaccurate determination of the real temperature of the susceptor, and consequently to overheating of the susceptor. Overheating of the susceptor in this context means heating to a temperature beyond a desired or optimal temperature during operation. This problem is particularly difficult to address in systems which can operate with variable airflow past the susceptor and in variable ambient environments.

The maximum duty cycle limit is determined and is not exceeded in order to prevent overheating of the susceptor during such a cooling event. Determining a maximum duty cycle limit may comprise reading the maximum duty cycle limit from a memory. Determining a maximum duty cycle limit may comprise calculating the maximum duty cycle limit.

Calculating the maximum duty cycle limit may comprise calculating the maximum duty cycle limit based on an average duty cycle used during a period preceding the cooling event. This is advantageous because the average duty cycle prior to the cooling event may reflect the power level required to maintain the target temperature for the susceptor in the absence of the cooling event.

The maximum duty cycle limit may be calculated as a fixed increase on the average duty cycle during the period immediately preceding the cooling event. The fixed increase may be between 3% and 30%. The fixed increase may preferably be between 3% and 15%. The fixed increase may be approximately 10%.

The maximum duty cycle limit may be calculated as a percentage of the average duty cycle during the period immediately preceding the cooling event. The percentage may be between 105% and 200%. The percentage may preferably be between 110% and 150%. The percentage may be approximately 125%.

The period preceding the cooling event may be a period of between 2 and 10 seconds preceding the cooling event. The period preceding the cooling event may preferably be a period of between 6 and 7 seconds. The period preceding the cooling event may more preferably be a period of 6.4 seconds.

The maximum duty cycle limit may be based on a time since the heating arrangement was activated. During a period of use of the inductive heating arrangement, the relationship between susceptor temperature and the apparent resistance or conductance of the susceptor may change. In particular, for a given susceptor temperature, the susceptor conductance tends to reduce over a period of heating. So the risk of overheating may increase with increasing time since activation of the heating arrangement. Accordingly, the maximum duty cycle limit may be reduced with increasing time since activation of the heating arrangement. The maximum duty cycle limit may be determined only after a predetermined time following activation of the heating arrangement.

The conductance or resistance associated with the susceptor may be an apparent conductance or apparent resistance of the susceptor and the coupled inductor. The method may comprise repeatedly: determining the conductance or resistance associated with the susceptor and adjusting a supply of pulses of electrical current based on the determined conductance or resistance.

Advantageously, the target conductance or target resistance is determined, in the absence of a cooling event associated with the susceptor, to correspond to a susceptor temperature no greater than a Curie temperature of material in the susceptor.

The susceptor may comprise a first susceptor material having a first Curie temperature and second susceptor material and a second Curie temperature. The second Curie temperature may be lower than the first Curie temperature. The target conductance or resistance may correspond to a susceptor temperature no greater than the second Curie temperature.

The first and second susceptor materials are preferably two separate materials that are joined together and therefore are in intimate physical contact with each other, whereby it is ensured that both susceptor materials have the same temperature due to thermal conduction. The two susceptor materials are preferably two layers or strips that are joined along one of their major surfaces. The susceptor may further comprise yet an additional third layer of susceptor material. The third layer of susceptor material is preferably made of the first susceptor material. The thickness of the third layer of susceptor material is preferably less than the thickness of the layer of the second susceptor material.

The target conductance or resistance may correspond to a susceptor temperature lying within a range of temperatures in which a conductance of the susceptor increases monotonically with increasing temperature, in the absence of a cooling event. At the lower end of this range of temperatures a material in the susceptor begins a phase change from a ferro-magnetic or ferri-magnetic state to a paramagnetic state. At the upper end of this range of temperatures the material has completed the phase change from a ferro-magnetic or ferri-magnetic state to a paramagnetic state.

The inductive heating arrangement may be part of an aerosol-generating system in which the susceptor is used to heat an aerosol-forming substrate. The aerosol-forming system may comprise an aerosol-generating device and an aerosol-generating article. The susceptor and the aerosol-forming substrate may be form part of the aerosol-generating article, wherein the aerosol-generating device may be configured to removably receive the aerosol-generating article.

The method may further comprise performing a calibration process for measuring one or more calibration values associated with the susceptor. Controlling the power provided to the inductive heating arrangement may comprise controlling the power such that the temperature of the susceptor is adjusted based on the one or more calibration values. The calibration values may correspond to the upper and lower ends of the range of temperatures in which a conductance of the susceptor increases monotonically with increasing temperature.

The one or more calibration values may comprise a first conductance value associated with a first calibration temperature of the susceptor and a second conductance value associated with a second calibration temperature of the susceptor. Controlling the power provided to the inductive heating arrangement may comprise maintaining a conductance value associated with the susceptor between the first conductance value and the second conductance value.

The one or more calibration values may comprise a first resistance value associated with a first calibration temperature of the susceptor and a second resistance value associated with a second calibration temperature of the susceptor. Controlling the power provided to the inductive heating arrangement may comprise maintaining a resistance value associated with the susceptor between the first resistance value and the second resistance value.

Controlling the power provided to the inductive heating arrangement may comprise controlling the power such that the temperature of the susceptor is between the first calibration temperature and the second calibration temperature.

The first calibration temperature may be between 150 degrees Celsius and 350 degrees Celsius and the second calibration temperature may be between 200 degrees Celsius and 400 degrees Celsius. A temperature difference between the first calibration temperature and the second calibration temperature may be at least 50 degrees Celsius.

The calibration process may be performed during user operation of the aerosol-generating device for producing an aerosol. In this way, the calibration values used to control the heating process are more accurate and reliable than if the calibration process were performed at manufacturing. This is especially important if the susceptor forms part of a separate aerosol-generating article that does not form part of the aerosol generating device. In such circumstances calibration at manufacturing is not possible.

The calibration process may be performed periodically based on one or more of: a predetermined duration of time, a predetermined number of user puffs, a predetermined number of temperature steps, and a measured voltage of the power source.

Conditions may change during user operation of the aerosol-generating device. For example, the susceptor may move relative to the inductive heating arrangement, the power source (for example, a battery) may lose some efficiency over time and so on. Accordingly, performing the calibration process periodically ensures the reliability of the calibration values, thereby ensuring that optimal temperature regulation is maintained throughout use of the aerosol-generating device.

Performing the calibration process may comprise the steps of: (i) controlling the power provided to the inductive heating arrangement to cause an increase of the temperature of the susceptor; (ii) monitoring at least a current value of the inductive heating arrangement; (iii) interrupting provision of power to the inductive heating arrangement when the at least the current value reaches a maximum, wherein the current value at the maximum corresponds to the second calibration temperature of the susceptor; and (iv) when the current value associated with the susceptor reaches a minimum, controlling the power provided to the inductive heating arrangement to cause an increase of the temperature of the susceptor, wherein the current value at the minimum corresponds to the first calibration temperature of the susceptor. Monitoring the at least a current value of the inductive heating arrangement may further comprise monitoring a voltage value of the inductive heating arrangement.

The method may further comprise repeating steps (i) to (iv) when the conductance value associated with the susceptor reaches the minimum. Subsequent to repeating steps (i) to (iv): a conductance value corresponding to the current value at the maximum may be stored as the second calibration value and a conductance value corresponding to the current value at the minimum may be stored as the first calibration value. Alternatively, a resistance value corresponding to the current value at the maximum may be stored as the second calibration value and a resistance value corresponding to the current value at the minimum may be stored as the first calibration value.

Performing the calibration process may comprise the steps of: (i) controlling the power provided to the inductive heating arrangement to cause an increase of the temperature of the susceptor; (ii) monitoring a conductance value or a resistance value associated with the susceptor; (iii) interrupting provision of power to the inductive heating arrangement when the conductance value reaches a maximum or when the resistance value reaches a minimum, wherein the maximum current value or the minimum resistance value corresponds to the second calibration temperature of the susceptor; and (iv) when the conductance value reaches a minimum or the resistance value reaches a maximum, controlling the power provided to the inductive heating arrangement to cause an increase of the temperature of the susceptor, wherein the minimum conductance value or the maximum resistance value corresponds to the first calibration temperature of the susceptor.

Steps (i) to (iv) may be repeated when the conductance value reaches the minimum or the resistance value reaches the maximum.

Subsequent to repeating steps (i) to (iv), the maximum conductance value or the minimum resistance value may be stored as the second conductance value and the minimum conductance value or the maximum resistance value may be stored as the first conductance value.

The calibration process is both quick and reliable without significantly delaying aerosol-production. Furthermore, repeating the steps of the calibration process significantly improves subsequent temperature regulation based on the calibration values obtained from the repeated calibration process because heat has had more time to distribute within the substrate. Performing the calibration process based on at least a measured current value assumes that the voltage of the power source remains constant. Thus, monitoring a conductance value or a resistance value (and therefore using both measured values of current and voltage) during the calibration process further improves the reliability of the calibration in case the voltage of the power source changes over a long period of time (for example, after being recharged many times).

The method may further comprise performing a pre-heating process to heat the susceptor to the first calibration temperature. The pre-heating process may have a predetermined duration. The pre-heating process allows for heat to spread within the substrate before launching the calibration process, thereby further improving the reliability of the calibration values.

Performing the preheating process may comprise: controlling the power provided to the inductive heating arrangement to cause an increase of the temperature of the susceptor; monitoring a at least a current value of the inductive heating arrangement; and interrupting provision of power to the inductive heating arrangement when the current value reaches a minimum, wherein the current value at the minimum corresponds to the first calibration temperature of the susceptor.

If the current value reaches a minimum during the predetermined duration of the pre-heating process, the method may comprise interrupting the provision of power to the inductive heating arrangement to cause a decrease of the temperature of the susceptor and subsequently resuming the provision of power to the inductive heating arrangement to cause an increase of the temperature of the susceptor to the first calibration temperature. Interrupting the provision of power to the inductive heating arrangement and resuming providing power to the inductive heating arrangement is repeated for the predetermined duration of the pre-heating process. The method may further comprise, if the current value of the susceptor does not reach a minimum during the predetermined duration of the pre-heating process, ceasing operation of the aerosol-generating device.

Performing the preheating process may comprise: controlling the power provided to the inductive heating arrangement to cause an increase of the temperature of the susceptor; monitoring a conductance value or a resistance value associated with the susceptor; and interrupting provision of power to the inductive heating arrangement when the conductance value reaches a minimum or when the resistance value reaches a maximum, wherein the conductance value at the minimum or the resistance value at the maximum corresponds to the first calibration temperature of the susceptor.

If, during the predetermined duration of the pre-heating process, the conductance value reaches a minimum or the resistance value reaches a maximum, the method may further comprise interrupting the provision of power to the inductive heating arrangement to cause a decrease of the temperature of the susceptor and subsequently resuming the provision of power to the inductive heating arrangement to cause an increase of the temperature of the susceptor to the first calibration temperature. Interrupting the provision of power to the inductive heating arrangement and the resuming providing power to the inductive heating arrangement may be repeated for the predetermined duration of the preheating process. If, during the predetermined duration of the pre-heating process, the conductance value does not reach a minimum or the resistance value does not reach a maximum, the method may further comprise ceasing operation of the aerosol-generating device.

Performing the steps of the pre-heating process for the pre-determined duration enables heat to spread within the substrate in time to reach the minimum conductance value measured during the calibration process no matter what the physical condition of the substrate (for example, if the substrate is dry or humid). This ensures reliability of the calibration process.

Detecting a cooling event may comprise detecting a user puffing on the aerosol-generating system. Detecting a cooling event may comprise detecting an airflow past or through the susceptor. An airflow sensor or pressure sensor may be used to detect an airflow. The airflow sensor may comprise a thermistor or a thermocouple.

The duration of the cooling event may be the duration for which a detected air pressure is below a threshold pressure. The duration of the cooling event may be the duration for which a detected airflow rate is above a threshold airflow rate. The duration of the cooling event may be determined as a fixed duration following the detection of the cooling event. For example the duration of the cooling event may be fixed as 4 seconds, which corresponds to a long user puff.

The inductor may comprise an inductor coil. The inductor coil may be a helical coil or a flat planar coil, in particular a pancake coil or a curved planar coil. The inductor may be used to generate a varying magnetic field. The varying magnetic field may be high-frequency varying magnetic field. The varying magnetic field may be in the range between 500 kHz (kilo-Hertz) to 30 MHz (Mega-Hertz), in particular between 5 MHz to 15 MHz, preferably between 5 MHz and 10 MHz. The varying magnetic field is used to inductively heat the susceptor due to at least one of Eddy currents or hysteresis losses, depending on the electrical and magnetic properties of the susceptor material.

The inductive heating arrangement may comprise a DC/AC converter, the inductor connected to the DC/AC converter. The susceptor may be arranged to inductively couple to the inductor. Power from the power source may be supplied to the inductor, via the DC/AC converter, as a plurality of pulses of electrical current, each pulse separated by a time interval. Controlling the power provided to the inductive heating arrangement may comprise controlling the time interval between each of the plurality of pulses. Controlling the power provided to the inductive heating arrangement may comprise controlling the length of each pulse of the plurality of pulses.

The method may further comprise, at the input side of the DC/AC converter, measuring a DC current drawn from the power source. The conductance value or the resistance value associated with the susceptor may be determined based on a DC supply voltage of the power source and from the DC current drawn from the power source. The method may further comprise measuring, at the input side of the DC/AC converter, the DC supply voltage of the power source. This is due to the fact that there is a monotonous relationship between the actual conductance (which cannot be determined if the susceptor forms part of the article) of the susceptor and the apparent conductance determined in this way (because the susceptor will impart the conductance of the LCR-circuit (of the DC/AC converter) it will be coupled to, because the majority of the load (R) will be due to the resistance of the susceptor. The conductance is 1/R. Hence, reference to the conductance of the susceptor in this text is reference to apparent conductance if the susceptor forms part of a separate aerosol-generating article.

According another embodiment of the invention, there is provided an inductive heating system comprising:

> a power source;
> an inductive heating arrangement comprising a susceptor and at least one inductor coupled to the susceptor so that the provision of an alternating electrical current to the inductor causes heating of the susceptor; and
> a controller configured to:

>> determine a conductance or resistance associated with the susceptor and to supply pulses of electrical current to the inductor from the power source to maintain a conductance or resistance associated with the susceptor at a target conductance or resistance;
>> detect a cooling event associated with the susceptor; and
>> increase a duty cycle of the pulses of electrical current to compensate for the detected cooling event, wherein the controller is configured to limit the duty cycle of the pulses of electrical current to be at or below a maximum duty cycle limit for the duration of the detected cooling event. The maximum duty cycle limit is less than 100%. The maximum duty cycle limit may be no more than 95%.

The maximum duty cycle limit is not exceeded in order to prevent overheating of the susceptor during such a cooling event. The controller may determine the maximum duty cycle limit by reading the maximum duty cycle limit from a memory. The controller may determine the maximum duty cycle limit by calculating the maximum duty cycle limit.

The controller may be configured to calculate the maximum duty cycle limit based on an average duty cycle during a period preceding the cooling event. The controller may be configured to calculate the maximum duty cycle limit as a fixed increase on the average duty cycle during the period immediately preceding the cooling event. The fixed increase may be between 3% and 30%. The fixed increase may preferably be between 3% and 15%. The fixed increase may be approximately 10%.

The controller may be configured to calculate the maximum duty cycle limit as a percentage of the average duty cycle during the period immediately preceding the cooling event. The percentage may be between 105% and 200%. The percentage may preferably be between 110% and 150%. The percentage may be approximately 125%.

The period preceding the cooling event may be a period of between 2 and 10 seconds preceding the cooling event. The period preceding the cooling event may preferably be a period of between 6 and 7 seconds. The period preceding the cooling event may more preferably be a period of 6.4 seconds.

The maximum duty cycle limit may be based on a time since the heating arrangement was activated. During a period of use of the inductive heating arrangement, the relationship between susceptor temperature and the apparent resistance or conductance of the susceptor may change. In particular, for a given susceptor temperature, the susceptor conductance tends to reduce over a period of heating. So the risk of overheating may increase with increasing time since activation of the heating arrangement. Accordingly, the maximum duty cycle limit may be reduced with increasing time since activation of the heating arrangement. The controller may determine the maximum duty cycle limit only after a predetermined time following activation of the heating arrangement.

The conductance or resistance associated with the susceptor may be an apparent conductance or apparent resistance of the susceptor and the coupled inductor. The controller may be configured to repeatedly: determine the conductance or resistance associated with the susceptor and adjust a supply of pulses of electrical current based on the determined conductance or resistance.

Advantageously, the target conductance or target resistance is determined, in the absence of a cooling event associated with the susceptor, to correspond to a susceptor temperature no greater than a Curie temperature of material in the susceptor.

The susceptor may comprise a first susceptor material having a first Curie temperature and second susceptor material and a second Curie temperature. The second Curie temperature may be lower than the first Curie temperature. The target conductance or resistance may correspond to a susceptor temperature no greater than the second Curie temperature.

The first and second susceptor materials are preferably two separate materials that are joined together and therefore are in intimate physical contact with each other, whereby it is ensured that both susceptor materials have the same temperature due to thermal conduction. The two susceptor materials are preferably two layers or strips that are joined along one of their major surfaces. The susceptor may further comprise yet an additional third layer of susceptor material. The third layer of susceptor material is preferably made of the first susceptor material. The thickness of the third layer of susceptor material is preferably less than the thickness of the layer of the second susceptor material.

The target conductance or resistance may correspond to a susceptor temperature lying within a range of temperatures in which a conductance of the susceptor increases monotonically with increasing temperature, in the absence of a cooling event. At the lower end of this range of temperatures a material in the susceptor begins a phase change from a ferro-magnetic or ferri-magnetic state to a paramagnetic state. At the upper end of this range of temperatures the material has completed the phase change from a ferro-magnetic or ferri-magnetic state to a paramagnetic state.

The controller may be configured to perform a calibration process for measuring one or more calibration values associated with the susceptor. The controller may be configured to control the power provided to the inductive heating arrangement such that the temperature of the susceptor is adjusted based on the one or more calibration values. The calibration values may correspond to the upper and lower ends of the range of temperatures in which a conductance of the susceptor increases monotonically with increasing temperature.

The one or more calibration values may comprise a first conductance value associated with a first calibration temperature of the susceptor and a second conductance value associated with a second calibration temperature of the susceptor. The controller may be configured to control the power provided to the inductive heating arrangement to maintain a conductance value associated with the susceptor between the first conductance value and the second conductance value.

The one or more calibration values may comprise a first resistance value associated with a first calibration temperature of the susceptor and a second resistance value associated with a second calibration temperature of the susceptor. The controller may control the power provided to the inductive heating arrangement to maintain a resistance value associated with the susceptor between the first resistance value and the second resistance value.

The controller may be configured to control the power such that the temperature of the susceptor is between the first calibration temperature and the second calibration temperature.

The first calibration temperature may be between 150 degrees Celsius and 350 degrees Celsius and the second calibration temperature may be between 200 degrees Celsius and 400 degrees Celsius. A temperature difference between the first calibration temperature and the second calibration temperature may be at least 50 degrees Celsius.

The controller may be configure to perform the calibration process during user operation of the aerosol-generating device for producing an aerosol. In this way, the calibration values used to control the heating process are more accurate and reliable than if the calibration process were performed at manufacturing. This is especially important if the susceptor forms part of a separate aerosol-generating article that does not form part of the aerosol generating device. In such circumstances calibration at manufacturing is not possible.

The controller may be configured to perform the calibration process periodically based on one or more of: a predetermined duration of time, a predetermined number of user puffs, a predetermined number of temperature steps, and a measured voltage of the power source.

Conditions may change during user operation of the aerosol-generating device. For example, the susceptor may move relative to the inductive heating arrangement, the power source (for example, a battery) may lose some efficiency over time and so on. Accordingly, performing the calibration process periodically ensures the reliability of the calibration values, thereby ensuring that optimal temperature regulation is maintained throughout use of the aerosol-generating device.

The controller may be configured to perform a calibration process comprising the steps of: (i) controlling the power provided to the inductive heating arrangement to cause an increase of the temperature of the susceptor; (ii) monitoring at least a current value of the inductive heating arrangement; (iii) interrupting provision of power to the inductive heating arrangement when the at least the current value reaches a maximum, wherein the current value at the maximum corresponds to the second calibration temperature of the susceptor; and (iv) when the current value associated with the susceptor reaches a minimum, controlling the power provided to the inductive heating arrangement to cause an increase of the temperature of the susceptor, wherein the current value at the minimum corresponds to the first calibration temperature of the susceptor. Monitoring the at least a current value of the inductive heating arrangement may further comprise monitoring a voltage value of the inductive heating arrangement.

The controller may be configured to repeat steps (i) to (iv) when the conductance value associated with the susceptor reaches the minimum. Subsequent to repeating steps (i) to (iv): a conductance value corresponding to the current value at the maximum may be stored as the second calibration value and a conductance value corresponding to the current value at the minimum may be stored as the first calibration value. Alternatively, a resistance value corresponding to the current value at the maximum may be stored as the second calibration value and a resistance value corresponding to the current value at the minimum may be stored as the first calibration value.

The controller may be configured to perform a calibration process comprising the steps of: (i) controlling the power provided to the inductive heating arrangement to cause an increase of the temperature of the susceptor; (ii) monitoring a conductance value or a resistance value associated with the susceptor; (iii) interrupting provision of power to the inductive heating arrangement when the conductance value reaches a maximum or when the resistance value reaches a minimum, wherein the maximum current value or the minimum resistance value corresponds to the second calibration temperature of the susceptor; and (iv) when the conductance value reaches a minimum or the resistance value reaches a maximum, controlling the power provided to the inductive heating arrangement to cause an increase of the temperature of the susceptor, wherein the minimum conductance value or the maximum resistance value corresponds to the first calibration temperature of the susceptor.

The controller may be configured to repeat steps (i) to (iv) when the conductance value reaches the minimum or the resistance value reaches the maximum.

Subsequent to repeating steps (i) to (iv), the controller may store the maximum conductance value or the minimum resistance value as the second conductance value and the minimum conductance value or the maximum resistance value may be stored as the first conductance value.

The calibration process is both quick and reliable without significantly delaying aerosol-production. Furthermore, repeating the steps of the calibration process significantly improves subsequent temperature regulation based on the calibration values obtained from the repeated calibration process because heat has had more time to distribute within the substrate. Performing the calibration process based on at least a measured current value assumes that the voltage of the power source remains constant. Thus, monitoring a conductance value or a resistance value (and therefore using both measured values of current and voltage) during the calibration process further improves the reliability of the calibration in case the voltage of the power source changes over a long period of time (for example, after being recharged many times).

The controller may be configured to perform a pre-heating process to heat the susceptor to the first calibration temperature. The pre-heating process may have a predetermined duration. The pre-heating process allows for heat to spread within the substrate before launching the calibration process, thereby further improving the reliability of the calibration values.

Performing the preheating process may comprise: controlling the power provided to the inductive heating arrangement to cause an increase of the temperature of the susceptor; monitoring a at least a current value of the inductive heating arrangement; and interrupting provision of power to the inductive heating arrangement when the current value reaches a minimum, wherein the current value at the minimum corresponds to the first calibration temperature of the susceptor.

If the current value reaches a minimum during the predetermined duration of the pre-heating process, the method may comprise interrupting the provision of power to the inductive heating arrangement to cause a decrease of the temperature of the susceptor and subsequently resuming the provision of power to the inductive heating arrangement to cause an increase of the temperature of the susceptor to the first calibration temperature. Interrupting the provision of power to the inductive heating arrangement and resuming providing power to the inductive heating arrangement is repeated for the predetermined duration of the pre-heating process. The method may further comprise, if the current value of the susceptor does not reach a minimum during the predetermined duration of the pre-heating process, ceasing operation of the aerosol-generating device.

Performing the preheating process may comprise: controlling the power provided to the inductive heating arrangement to cause an increase of the temperature of the susceptor; monitoring a conductance value or a resistance value associated with the susceptor; and interrupting provision of power to the inductive heating arrangement when the conductance value reaches a minimum or when the resistance value reaches a maximum, wherein the conductance value at the minimum or the resistance value at the maximum corresponds to the first calibration temperature of the susceptor.

If, during the predetermined duration of the pre-heating process, the conductance value reaches a minimum or the resistance value reaches a maximum, the method may further comprise interrupting the provision of power to the inductive heating arrangement to cause a decrease of the temperature of the susceptor and subsequently resuming the provision of power to the inductive heating arrangement to cause an increase of the temperature of the susceptor to the first calibration temperature. Interrupting the provision of power to the inductive heating arrangement and the resuming providing power to the inductive heating arrangement may be repeated for the predetermined duration of the preheating process. If, during the predetermined duration of the pre-heating process, the conductance value does not reach a minimum or the resistance value does not reach a maximum, the method may further comprise ceasing operation of the aerosol-generating device.

Performing the steps of the pre-heating process for the pre-determined duration enables heat to spread within the substrate in time to reach the minimum conductance value measured during the calibration process no matter what the physical condition of the substrate (for example, if the substrate is dry or humid). This ensures reliability of the calibration process.

The inductor may comprise an inductor coil. The inductor coil may be a helical coil or a flat planar coil, in particular a pancake coil or a curved planar coil. The inductor may be used to generate a varying magnetic field. The varying magnetic field may be high-frequency varying magnetic field. The varying magnetic field may be in the range between 500 kHz (kilo-Hertz) to 30 MHz (Mega-Hertz), in particular between 5 MHz to 15 MHz, preferably between 5 MHz and 10 MHz. The varying magnetic field is used to inductively heat the susceptor due to at least one of Eddy currents or hysteresis losses, depending on the electrical and magnetic properties of the susceptor material. The inductive heating system may comprise a plurality of inductors.

The power source may provide a DC supply voltage and a DC current, the inductive heating system comprising a DC/AC converter connected between the power source and the inductor. The controller may be configured to determine the conductance or resistance from the DC supply voltage and the DC current drawn from the power source.

The inductive heating arrangement may comprise a DC/AC converter, the inductor connected to the DC/AC converter. The susceptor may be arranged to inductively couple to the inductor. Power from the power source may be supplied to the inductor, via the DC/AC converter, as a plurality of pulses of electrical current, each pulse separated by a time interval. Controlling the power provided to the inductive heating arrangement may comprise controlling the time interval between each of the plurality of pulses. Controlling the power provided to the inductive heating arrangement may comprise controlling the length of each pulse of the plurality of pulses.

The controller may be configured to, at the input side of the DC/AC converter, measure a DC current drawn from the power source. The conductance value or the resistance value associated with the susceptor may be determined based on a DC supply voltage of the power source and from the DC current drawn from the power source. The controller may be configured to measure, at the input side of the DC/AC converter, the DC supply voltage of the power source. This is due to the fact that there is a monotonous relationship between the actual conductance (which cannot be determined if the susceptor forms part of the article) of the susceptor and the apparent conductance determined in this way (because the susceptor will impart the conductance of the LCR-circuit (of the DC/AC converter) it will be coupled to, because the majority of the load (R) will be due to the resistance of the susceptor. The conductance is 1/R. Hence, reference to the conductance of the susceptor in this text is reference to apparent conductance if the susceptor forms part of a separate aerosol-generating article.

The inductive heating system may comprise an airflow sensor connected to the controller, the controller configured to detect the cooling event based on an input signal from the airflow sensor. The airflow sensor may comprise a thermistor or a thermocouple.

The controller may be configured to determine the duration of the cooling event as a duration for which a detected air pressure is below a threshold pressure. The controller may be configured to determine the duration of the cooling event as the duration for which a detected airflow rate is above a threshold airflow rate. The controller may be configured to determine the duration of the cooling event as a fixed duration following the detection of the cooling event. For example the duration of the cooling event may be fixed as 4 seconds, which corresponds to a long user puff.

In another embodiment of the invention, there is provided an aerosol generating device comprising an inductive heating system comprising:

a power source;
an inductive heating arrangement comprising at least one inductor configured so that the provision of an alternating electrical current to the inductor causes heating of a susceptor coupled to the inductor, wherein the susceptor is configured to heat an aerosol-forming substrate; and
a controller configured to:

determine a conductance or resistance associated with the susceptor and to supply pulses of electrical current to the inductor from the power source to maintain a conductance or resistance associated with the susceptor at a target conductance or resistance;
detect a cooling event associated with the susceptor; and
increase a duty cycle of the pulses of electrical current to compensate for the detected cooling event, wherein the controller is configured to limit the duty cycle of the pulses of electrical current to be at or below a maximum duty cycle limit for the duration of the detected cooling event. The maximum duty cycle limit may be less than 100%. The maximum duty cycle limit may be no greater than 95%.

The aerosol generating device may comprise a cavity configured to receive the aerosol-forming substrate, the aerosol-forming substrate being heated by the susceptor when positioned in the cavity.

The aerosol-forming substrate may be provided in a separate aerosol-generating article. The susceptor may be part of the aerosol-generating article. The susceptor may be part of the aerosol generating device. The aerosol generating device may comprise a plurality of susceptors.

In use the susceptor may be positioned in the cavity. In use, the susceptor may be positioned at least partially within the aerosol-forming substrate or aerosol-generating article. In use, the susceptor may be positioned, at least partially, outside of the aerosol-forming substrate or aerosol-generating article.

The maximum duty cycle limit is not exceeded in order to prevent overheating of the susceptor during such a cooling event. The controller may determine the maximum duty cycle limit by reading the maximum duty cycle limit from a memory. The controller may determine the maximum duty cycle limit by calculating the maximum duty cycle limit.

The controller may be configured to calculate the maximum duty cycle limit based on an average duty cycle during a period preceding the cooling event. The controller may be configured to calculate the maximum duty cycle limit as a fixed increase on the average duty cycle during the period immediately preceding the cooling event. The fixed increase may be between 3% and 30%. The fixed increase may preferably be between 3% and 15%. The fixed increase may be approximately 10%.

The controller may be configured to calculate the maximum duty cycle limit as a percentage of the average duty cycle during the period immediately preceding the cooling event. The percentage may be between 105% and 200%. The percentage may preferably be between 110% and 150%. The percentage may be approximately 125%.

The period preceding the cooling event may be a period of between 2 and 10 seconds preceding the cooling event. The period preceding the cooling event may preferably be a period of between 6 and 7 seconds. The period preceding the cooling event may more preferably be a period of 6.4 seconds.

The maximum duty cycle limit may be based on a time since the heating arrangement was activated. During a period of use of the inductive heating arrangement, the relationship between susceptor temperature and the apparent resistance or conductance of the susceptor may change. In particular, for a given susceptor temperature, the susceptor conductance tends to reduce over a period of heating. So the risk of overheating may increase with increasing time since activation of the heating arrangement. Accordingly, the maximum duty cycle limit may be reduced with increasing time since activation of the heating arrangement. The controller may determine the maximum duty cycle limit only after a predetermined time following activation of the heating arrangement.

The conductance or resistance associated with the susceptor may be an apparent conductance or apparent resistance of the susceptor and the coupled inductor. The controller may be configured to repeatedly:

determine the conductance or resistance associated with the susceptor and adjust a supply of pulses of electrical current based on the determined conductance or resistance.

Advantageously, the target conductance or target resistance is determined, in the absence of a cooling event associated with the susceptor, to correspond to a susceptor temperature no greater than a Curie temperature of material in the susceptor.

The susceptor may comprise a first susceptor material having a first Curie temperature and second susceptor material and a second Curie temperature. The second Curie temperature may be lower than the first Curie temperature. The target conductance or resistance may correspond to a susceptor temperature no greater than the second Curie temperature.

The first and second susceptor materials are preferably two separate materials that are joined together and therefore are in intimate physical contact with each other, whereby it is ensured that both susceptor materials have the same temperature due to thermal conduction. The two susceptor materials are preferably two layers or strips that are joined along one of their major surfaces. The susceptor may further comprise yet an additional third layer of susceptor material. The third layer of susceptor material is preferably made of the first susceptor material. The thickness of the third layer of susceptor material is preferably less than the thickness of the layer of the second susceptor material.

The target conductance or resistance may correspond to a susceptor temperature lying within a range of temperatures in which a conductance of the susceptor increases monotonically with increasing temperature, in the absence of a cooling event. At the lower end of this range of temperatures a material in the susceptor begins a phase change from a ferro-magnetic or ferri-magnetic state to a paramagnetic state. At the upper end of this range of temperatures the material has completed the phase change from a ferro-magnetic or ferri-magnetic state to a paramagnetic state.

The controller may be configured to perform a calibration process for measuring one or more calibration values associated with the susceptor. The controller may be configured to control the power provided to the inductive heating arrangement such that the temperature of the susceptor is adjusted based on the one or more calibration values. The calibration values may correspond to the upper and lower ends of the range of temperatures in which a conductance of the susceptor increases monotonically with increasing temperature.

The one or more calibration values may comprise a first conductance value associated with a first calibration temperature of the susceptor and a second conductance value associated with a second calibration temperature of the susceptor. The controller may be configured to control the power provided to the inductive heating arrangement to maintain a conductance value associated with the susceptor between the first conductance value and the second conductance value.

The one or more calibration values may comprise a first resistance value associated with a first calibration temperature of the susceptor and a second resistance value associated with a second calibration temperature of the susceptor. The controller may control the power provided to the inductive heating arrangement to maintain a resistance value associated with the susceptor between the first resistance value and the second resistance value.

The controller may be configured to control the power such that the temperature of the susceptor is between the first calibration temperature and the second calibration temperature.

The first calibration temperature may be between 150 degrees Celsius and 350 degrees Celsius and the second calibration temperature may be between 200 degrees Celsius and 400 degrees Celsius. A temperature difference between the first calibration temperature and the second calibration temperature may be at least 50 degrees Celsius.

The controller may be configure to perform the calibration process during user operation of the aerosol-generating device for producing an aerosol. In this way, the calibration values used to control the heating process are more accurate and reliable than if the calibration process were performed at manufacturing. This is especially important if the susceptor forms part of a separate aerosol-generating article that does not form part of the aerosol generating device. In such circumstances calibration at manufacturing is not possible.

The controller may be configured to perform the calibration process periodically based on one or more of: a predetermined duration of time, a predetermined number of user puffs, a predetermined number of temperature steps, and a measured voltage of the power source.

Conditions may change during user operation of the aerosol-generating device. For example, the susceptor may move relative to the inductive heating arrangement, the power source (for example, a battery) may lose some efficiency over time and so on. Accordingly, performing the calibration process periodically ensures the reliability of the calibration values, thereby ensuring that optimal temperature regulation is maintained throughout use of the aerosol-generating device.

The controller may be configured to perform a calibration process comprising the steps of: (i) controlling the power provided to the inductive heating arrangement to cause an increase of the temperature of the susceptor; (ii) monitoring at least a current value of the inductive heating arrangement; (iii) interrupting provision of power to the inductive heating arrangement when the at least the current value reaches a maximum, wherein the current value at the maximum corresponds to the second calibration temperature of the susceptor; and (iv) when the current value associated with the susceptor reaches a minimum, controlling the power provided to the inductive heating arrangement to cause an increase of the temperature of the susceptor, wherein the current value at the minimum corresponds to the first calibration temperature of the susceptor. Monitoring the at least a current value of the inductive heating arrangement may further comprise monitoring a voltage value of the inductive heating arrangement.

The controller may be configured to repeat steps (i) to (iv) when the conductance value associated with the susceptor reaches the minimum. Subsequent to repeating steps (i) to (iv): a conductance value corresponding to the current value at the maximum may be stored as the second calibration value and a conductance value corresponding to the current value at the minimum may be stored as the first calibration value. Alternatively, a resistance value corresponding to the current value at the maximum may be stored as the second calibration value and a resistance value corresponding to the current value at the minimum may be stored as the first calibration value.

The controller may be configured to perform a calibration process comprising the steps of: (i) controlling the power provided to the inductive heating arrangement to cause an increase of the temperature of the susceptor; (ii) monitoring a conductance value or a resistance value associated with the susceptor; (iii) interrupting provision of power to the inductive heating arrangement when the conductance value reaches a maximum or when the resistance value reaches a minimum, wherein the maximum current value or the minimum resistance value corresponds to the second calibration temperature of the susceptor; and (iv) when the conductance value reaches a minimum or the resistance value reaches a maximum, controlling the power provided to the inductive heating arrangement to cause an increase of the temperature of the susceptor, wherein the minimum conductance value or the maximum resistance value corresponds to the first calibration temperature of the susceptor.

The controller may be configured to repeat steps (i) to (iv) when the conductance value reaches the minimum or the resistance value reaches the maximum.

Subsequent to repeating steps (i) to (iv), the controller may store the maximum conductance value or the minimum resistance value as the second conductance value and the minimum conductance value or the maximum resistance value may be stored as the first conductance value.

The calibration process is both quick and reliable without significantly delaying aerosol-production. Furthermore, repeating the steps of the calibration process significantly improves subsequent temperature regulation based on the calibration values obtained from the repeated calibration process because heat has had more time to distribute within the substrate. Performing the calibration process based on at least a measured current value assumes that the voltage of the power source remains constant. Thus, monitoring a conductance value or a resistance value (and therefore using both measured values of current and voltage) during the calibration process further improves the reliability of the calibration in case the voltage of the power source changes over a long period of time (for example, after being recharged many times).

The controller may be configured to perform a pre-heating process to heat the susceptor to the first calibration temperature. The pre-heating process may have a predetermined duration. The pre-heating process allows for heat to spread within the substrate before launching the calibration process, thereby further improving the reliability of the calibration values.

Performing the preheating process may comprise: controlling the power provided to the inductive heating arrangement to cause an increase of the temperature of the susceptor; monitoring a at least a current value of the inductive heating arrangement; and interrupting provision of power to the inductive heating arrangement when the current value reaches a minimum, wherein the current value at the minimum corresponds to the first calibration temperature of the susceptor.

If the current value reaches a minimum during the predetermined duration of the pre-heating process, the method may comprise interrupting the provision of power to the inductive heating arrangement to cause a decrease of the temperature of the susceptor and subsequently resuming the provision of power to the inductive heating arrangement to cause an increase of the temperature of the susceptor to the first calibration temperature. Interrupting the provision of power to the inductive heating arrangement and resuming providing power to the inductive heating arrangement is repeated for the predetermined duration of the pre-heating process. The method may further comprise, if the current value of the susceptor does not reach a minimum during the predetermined duration of the pre-heating process, ceasing operation of the aerosol-generating device.

Performing the preheating process may comprise: controlling the power provided to the inductive heating arrangement to cause an increase of the temperature of the susceptor; monitoring a conductance value or a resistance value associated with the susceptor; and interrupting provision of power to the inductive heating arrangement when the conductance value reaches a minimum or when the resistance value reaches a maximum, wherein the conductance value at the minimum or the resistance value at the maximum corresponds to the first calibration temperature of the susceptor.

If, during the predetermined duration of the pre-heating process, the conductance value reaches a minimum or the resistance value reaches a maximum, the method may further comprise interrupting the provision of power to the inductive heating arrangement to cause a decrease of the temperature of the susceptor and subsequently resuming the provision of power to the inductive heating arrangement to cause an increase of the temperature of the susceptor to the first calibration temperature. Interrupting the provision of power to the inductive heating arrangement and the resuming providing power to the inductive heating arrangement may be repeated for the predetermined duration of the preheating process. If, during the predetermined duration of the pre-heating process, the conductance value does not reach a minimum or the resistance value does not reach a maximum, the method may further comprise ceasing operation of the aerosol-generating device.

Performing the steps of the pre-heating process for the pre-determined duration enables heat to spread within the substrate in time to reach the minimum conductance value measured during the calibration process no matter what the physical condition of the substrate (for example, if the substrate is dry or humid). This ensures reliability of the calibration process.

The inductor may comprise an inductor coil. The inductor coil may be a helical coil or a flat planar coil, in particular a pancake coil or a curved planar coil. The inductor may be a helical coil that surrounds at least a portion of the cavity. The inductor may be a flat planar coil positioned in or adjacent to the cavity. The inductor may be used to generate a varying magnetic field. The inductor may be used to generate a varying magnetic field in the cavity. The varying magnetic field may be high-frequency varying magnetic field. The varying magnetic field may be in the range between 500 kHz (kilo-Hertz) to 30 MHz (Mega-Hertz), in particular between 5 MHz to 15 MHz, preferably between 5 MHz and 10 MHz. The varying magnetic field is used to inductively heat the susceptor due to at least one of Eddy currents or hysteresis losses, depending on the electrical and magnetic properties of the susceptor material. The inductive heating system may comprise a plurality of inductors. The plurality of inductor may be identical to one another or different to one another.

The power source may provide a DC supply voltage and a DC current, the inductive heating system comprising a DC/AC converter connected between the power source and the inductor. The controller may be configured to determine the conductance or resistance from the DC supply voltage and the DC current drawn from the power source.

The inductive heating arrangement may comprise a DC/AC converter, the inductor connected to the DC/AC converter. The susceptor may be arranged to inductively couple to the inductor. Power from the power source may be supplied to the inductor, via the DC/AC converter, as a plurality of pulses of electrical current, each pulse separated by a time interval. Controlling the power provided to the inductive heating arrangement may comprise controlling the time interval between each of the plurality of pulses. Controlling the power provided to the inductive heating arrangement may comprise controlling the length of each pulse of the plurality of pulses.

The controller may be configured to, at the input side of the DC/AC converter, measure a DC current drawn from the power source. The conductance value or the resistance value associated with the susceptor may be determined based on a DC supply voltage of the power source and from the DC current drawn from the power source. The controller may be configured to measure, at the input side of the DC/AC converter, the DC supply voltage of the power source. This is due to the fact that there is a monotonous relationship between the actual conductance (which cannot be determined if the susceptor forms part of the article) of the susceptor and the apparent conductance determined in this way (because the susceptor will impart the conductance of the LCR-circuit (of the DC/AC converter) it will be coupled to, because the majority of the load (R) will be due to the resistance of the susceptor. The conductance is 1/R. Hence, reference to the conductance of the susceptor in this text is reference to apparent conductance if the susceptor forms part of a separate aerosol-generating article.

The inductive heating system may comprise an airflow sensor connected to the controller, the controller configured to detect the cooling event based on an input signal from the airflow sensor. The airflow sensor may comprise a thermistor or a thermocouple.

The controller may be configured to determine the duration of the cooling event as a duration for which a detected air pressure is below a threshold pressure. The controller may be configured to determine the duration of the cooling event as the duration for which a detected airflow rate is above a threshold airflow rate. The controller may be configured to determine the duration of the cooling event as a fixed duration following the detection of the cooling event. For example the duration of the cooling event may be fixed as 4 seconds, which corresponds to a long user puff.

In a further embodiment, there is provided an aerosol generating system comprising an aerosol-generating device according to embodiment described above and an aerosol generating article containing the suceptor and the aerosol-forming substrate, wherein the aerosol generating article is separable from the aerosol-generating device.

The aerosol generating article may comprise a mouthpiece. The aerosol generating article may comprise a filter.

As used herein, the term "aerosol-generating device" refers to a device that interacts with an aerosol-forming substrate to generate an aerosol. An aerosol-generating device may interact with one or both of an aerosol-generating article comprising an aerosol-forming substrate, and a cartridge comprising an aerosol-forming substrate.

As used herein, the term "aerosol-generating system" refers to the combination of an aerosol-generating device with an aerosol-forming substrate. When the aerosol-forming substrate forms part of an aerosol-generating article, the aerosol-generating system refers to the combination of the aerosol-generating device with the aerosol-generating article. In the aerosol-generating system, the aerosol-forming substrate and the aerosol-generating device cooperate to generate an aerosol.

As used herein, the term "aerosol-forming substrate" refers to a substrate capable of releasing volatile compounds that can form an aerosol. The volatile compounds may be released by heating or combusting the aerosol-forming substrate. As an alternative to heating or combustion, in some cases, volatile compounds may be released by a chemical reaction or by a mechanical stimulus, such as ultrasound. The aerosol-forming substrate may be solid or may comprise both solid and liquid components. An aerosol-forming substrate may be part of an aerosol-generating article.

As used herein, the term "aerosol-generating article" refers to an article comprising an aerosol-forming substrate that is capable of releasing volatile compounds that can form an aerosol. An aerosol-generating article may be disposable. An aerosol-generating article comprising an aerosol-forming substrate comprising tobacco may be referred to herein as a tobacco stick.

An aerosol-forming substrate may comprise nicotine. An aerosol-forming substrate may comprise tobacco, for example may comprise a tobacco-containing material containing volatile tobacco flavor compounds, which are released from the aerosol-forming substrate upon heating. In preferred embodiments an aerosol-forming substrate may comprise homogenized tobacco material, for example cast leaf tobacco. The aerosol-forming substrate may comprise both solid and liquid components. The aerosol-forming substrate may comprise a tobacco-containing material containing volatile tobacco flavor compounds, which are released from the substrate upon heating. The aerosol-forming substrate may comprise a non-tobacco material. The aerosol-forming substrate may further comprise an aerosol former. Examples of suitable aerosol formers are glycerin and propylene glycol.

As used herein, the term "mouthpiece" refers to a portion of an aerosol-generating article, an aerosol-generating device or an aerosol-generating system that is placed into a user's mouth in order to directly inhale an aerosol.

As used herein, the term "susceptor" refers to an element comprising a material that is capable of converting the energy of a magnetic field into heat. When a susceptor is located in an alternating magnetic field, the susceptor is heated. Heating of the susceptor may be the result of at least one of hysteresis losses and eddy currents induced in the susceptor, depending on the electrical and magnetic properties of the susceptor material.

As used herein, the term "inductively couple" refers to the heating of a susceptor when penetrated by an alternating magnetic field. The heating may be caused by the generation of eddy currents in the susceptor. The heating may be caused by magnetic hysteresis losses.

As used herein, the term "duty cycle" of the pulses of electrical current means the percentage of the ratio of pulse duration, or pulse width to the total period over which the pulses of current are supplied.

As used herein, the term "puff" means the action of a user drawing an aerosol into their body through their mouth or nose.

In all of the embodiments described, the use of a maximum duty cycle limit during a detected cooling event has an advantage of preventing overheating.

Figure 1 shows a schematic cross-sectional illustration of an aerosol-generating article;
Figure 2A shows a schematic cross-sectional illustration of an aerosol-generating device for use with the aerosol-generating article illustrated in Figure 1;
Figure 2B shows a schematic cross-sectional illustration of the aerosol-generating device in engagement with the aerosol-generating article illustrated in Figure 1;
Figure 3 is a block diagram showing an inductive heating device of the aerosol-generating device described in relation to Figure 2;
Figure 4 is a schematic diagram showing electronic components of the inductive heating device described in relation to Figure 3;
Figure 5 is a schematic diagram on an inductor of an LC load network of the inductive heating device described in relation to Figure 4;
Figure 6 is a graph of DC current vs. time illustrating the remotely detectable current changes that occur when a susceptor material undergoes a phase transition associated with its Curie point;
Figure 7 illustrates a conductance profile associated with the susceptor and corresponding duty cycle of the current pulses during operation of the aerosol-generating device; and
Figure 8 is a flow diagram showing a method for limiting a duty cycle of the pulses of current in the aerosol-generating device of Figure 2.

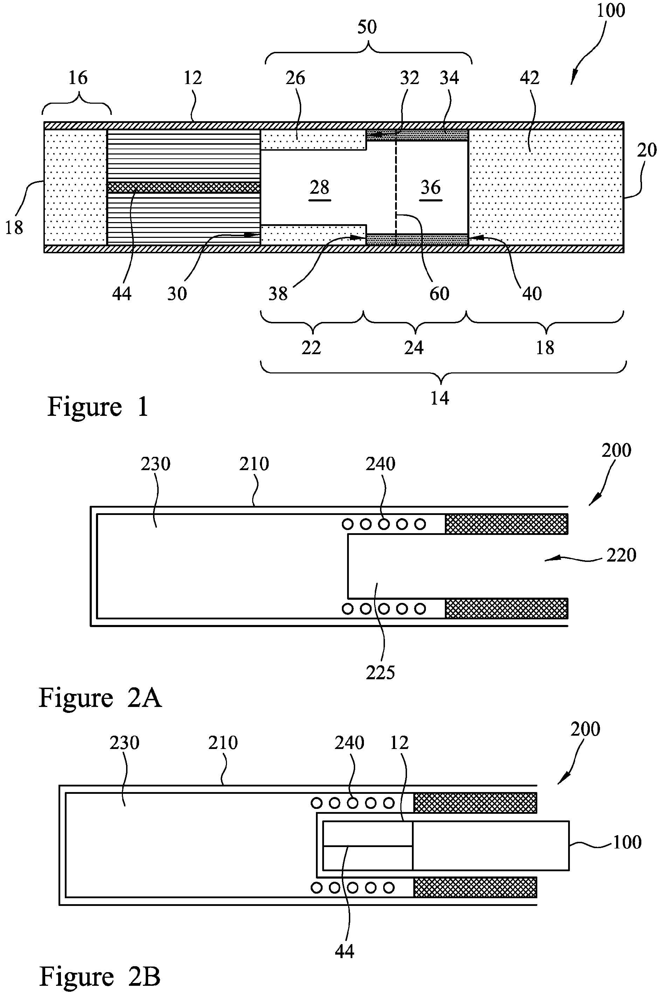

Figure 1 illustrates an aerosol-generating article 100. The aerosol-generating article 100 shown in Figure 1 comprises a rod 12 of aerosol-generating substrate and a downstream section 14 at a location downstream of the rod 12 of aerosol-generating substrate. Further, the aerosol-generating article 100 comprises an upstream section 16 at a location upstream of the rod 12 of aerosol-generating substrate. Thus, the aerosol-generating article 100 extends from an upstream or distal end 18 to a downstream or mouth end 20.

The downstream section 14 comprises a support element 22 located immediately downstream of the rod 12 of aerosol-generating substrate, the support element 22 being in longitudinal alignment with the rod 12. In the embodiment of Figure 1, the upstream end of the support element 18 abuts the downstream end of the rod 12 of aerosol-generating substrate. In addition, the downstream section 14 comprises an aerosol-cooling element 24 located immediately downstream of the support element 22, the aerosol-cooling element 24 being in longitudinal alignment with the rod 12 and the support element 22. In the embodiment of Figure 1, the upstream end of the aerosol-cooling element 24 abuts the downstream end of the support element 22.

The support element 22 and the aerosol-cooling element 24 together define an intermediate hollow section 50 of the aerosol-generating article 100. As a whole, the intermediate hollow section 50 does not substantially contribute to the overall RTD of the aerosol-generating article.

The support element 22 comprises a first hollow tubular segment 26. The first hollow tubular segment 26 is provided in the form of a hollow cylindrical tube made of cellulose acetate. The first hollow tubular segment 26 defines an internal cavity 28 that extends all the way from an upstream end 30 of the first hollow tubular segment to an downstream end 32 of the first hollow tubular segment 20. The internal cavity 28 is substantially empty, and so substantially unrestricted airflow is enabled along the internal cavity 28.

The first hollow tubular segment 26 has a length of about 8 millimetres, an external diameter of about 7.25 millimetres, and an internal diameter (DFTS) of about 1.9 millimetres. Thus, a thickness of a peripheral wall of the first hollow tubular segment 26 is about 2.67 millimetres.

The aerosol-cooling element 24 comprises a second hollow tubular segment 34. The second hollow tubular segment 34 is provided in the form of a hollow cylindrical tube made of cellulose acetate. The second hollow tubular segment 34 defines an internal cavity 36 that extends all the way from an upstream end 38 of the second hollow tubular segment to a downstream end 40 of the second hollow tubular segment 34. The internal cavity 36 is substantially empty, and so substantially unrestricted airflow is enabled along the internal cavity 36.

The second hollow tubular segment 34 has a length of about 8 millimetres, an external diameter of about 7.25 millimetres, and an internal diameter (DSTS) of about 3.25 millimetres. Thus, a thickness of a peripheral wall of the second hollow tubular segment 34 is about 2 millimetres.

The aerosol-generating article 100 comprises a ventilation zone 60 provided at a location along the second hollow tubular segment 34. In more detail, the ventilation zone is provided at about 2 millimetres from the upstream end of the second hollow tubular segment 34. A ventilation level of the aerosol-generating article 100 is about 25 percent.

In the embodiment of Figure 1, the downstream section 14 further comprises a mouthpiece element 42 at a location downstream of the intermediate hollow section 50. In more detail, the mouthpiece element 42 is positioned immediately downstream of the aerosol-cooling element 24. As shown in the drawing of Figure 1, an upstream end of the mouthpiece element 42 abuts the downstream end 40 of the aerosol-cooling element 18.

The mouthpiece element 42 is provided in the form of a cylindrical plug of low-density cellulose acetate. The mouthpiece element 42 has a length of about 12 millimetres and an external diameter of about 7.25 millimetres.

The rod 12 comprises an aerosol-generating substrate of one of the types described above. The rod 12 of aerosol-generating substrate has an external diameter of about 7.25 millimetres and a length of about 12 millimetres.

The aerosol-generating article 100 further comprises an elongate susceptor element 44 within the rod 12 of aerosol-generating substrate. In more detail, the susceptor element 44 is arranged substantially longitudinally within the aerosol-generating substrate, such as to be approximately parallel to the longitudinal direction of the rod 12. As shown in the drawing of Figure 1, the susceptor element 44 is positioned in a radially central position within the rod and extends effectively along the longitudinal axis of the rod 12.

The susceptor element 44 extends all the way from an upstream end to a downstream end of the rod 12. In effect, the susceptor element 44 has substantially the same length as the rod 12 of aerosol-generating substrate.

In the embodiment of Figure 1, the susceptor element 44 is provided in the form of a strip and has a length of about 12 millimetres, a thickness of about 60 micrometres, and a width of about 4 millimetres. The upstream section 16 comprises an upstream element 46 located immediately upstream of the rod 12 of aerosol-generating substrate, the upstream element 46 being in longitudinal alignment with the rod 12. In the embodiment of Figure 1, the downstream end of the upstream element 46 abuts the upstream end of the rod 12 of aerosol-generating substrate. This advantageously prevents the susceptor element 44 from being dislodged. Further, this ensures that the consumer cannot accidentally contact the heated susceptor element 44 after use.

The upstream element 46 is provided in the form of a cylindrical plug of cellulose acetate circumscribed by a stiff wrapper. The upstream element 46 has a length of about 5 millimetres.

The susceptor 44 comprises at least two different materials. The susceptor 44 comprises at least two layers: a first layer of a first susceptor material disposed in physical contact with a second layer of a second susceptor material. The first susceptor material and the second susceptor material may each have a Curie temperature. In this case, the Curie temperature of the second susceptor material is lower than the Curie temperature of the first susceptor material. The first material may not have a Curie temperature. The first susceptor material may be aluminum, iron or stainless steel. The second susceptor material may be nickel or a nickel alloy. The susceptor 44 may be formed by electroplating at least one patch of the second susceptor material onto a strip of the first susceptor material. The susceptor may be formed by cladding a strip of the second susceptor material to a strip of the first susceptor material.

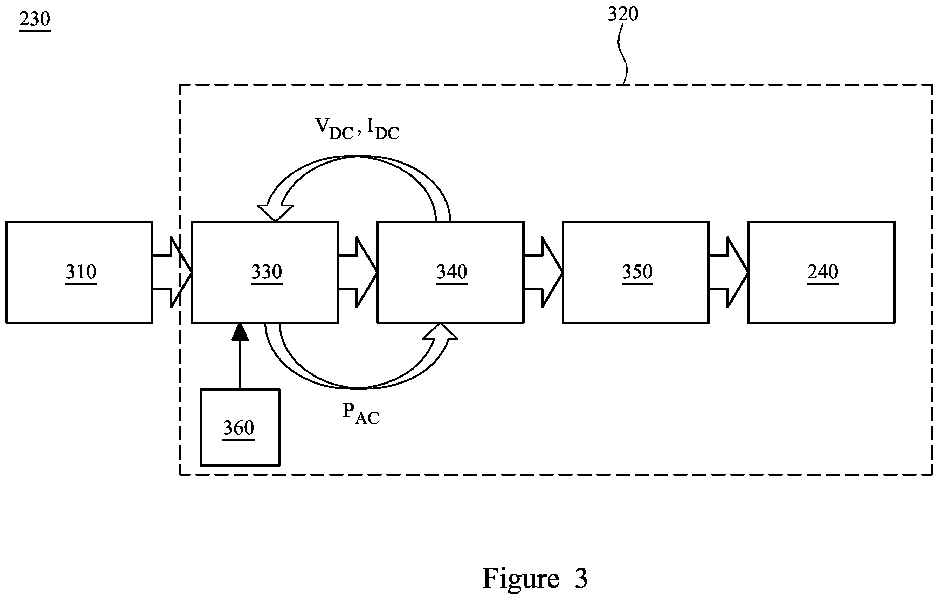

In use, air is drawn through the aerosol-generating article 100 by a user from the distal end 18 to the mouth end 20. The distal end 18 of the aerosol-generating article 100 may also be described as the upstream end of the aerosol-generating article 100 and the mouth end 20 of the aerosol-generating article 100 may also be described as the downstream end of the aerosol-generating article 100. Elements of the aerosol-generating article 100 located between the mouth end 20 and the distal end 18 can be described as being upstream of the mouth end 20 or, alternatively, downstream of the distal end 18. The aerosol-forming substrate 12 is located at the distal or upstream end 18 of the aerosol-generating article 100. The aerosol-generating article 100 illustrated in Figure 1 is designed to engage with an aerosol-generating device, such as the aerosol-generating device 200 illustrated in Figure 2A, for producing an aerosol. The aerosol-generating device 200 comprises a housing 210 having a cavity 220 configured to receive the aerosol-generating article 100. The aerosol- generating device 200 further comprises an inductive heating device 230 configured to heat an aerosol-generating article 100 for producing an aerosol. Figure 2B illustrates the aerosol-generating device 200 when the aerosol-generating article 100 is inserted into the cavity 220. The inductive heating device 230 is illustrated as a block diagram in Figure 3. The inductive heating device 230 comprises a DC power source 310 and a heating arrangement 320 (also referred to as power supply electronics). The heating arrangement comprises a controller 330, a DC/AC converter 340, a matching network 350 and an inductor 240.

The DC power source 310 is configured to provide DC power to the heating arrangement 320. Specifically, the DC power source 310 is configured to provide a DC supply voltage (VDC) and a DC current (IDC) to the DC/AC converter 340. Preferably, the power source 310 is a battery, such as a lithium ion battery. As an alternative, the power source 310 may be another form of charge storage device such as a capacitor. The power source 310 may require recharging. For example, the power source 310 may have sufficient capacity to allow for the continuous generation of aerosol for a period of around six minutes or for a period that is a multiple of six minutes. In another example, the power source 310 may have sufficient capacity to allow for a predetermined number of puffs or discrete activations of the heating arrangement.

The DC/AC converter 340 is configured to supply the inductor 240 with a high frequency alternating current. As used herein, the term "high frequency alternating current" means an alternating current having a frequency of between about 500 kilohertz and about 30 megahertz. The high frequency alternating current may have a frequency of between about 1 megahertz and about 30 megahertz, such as between about 1 megahertz and about 10 megahertz, or such as between about 5 megahertz and about 8 megahertz.

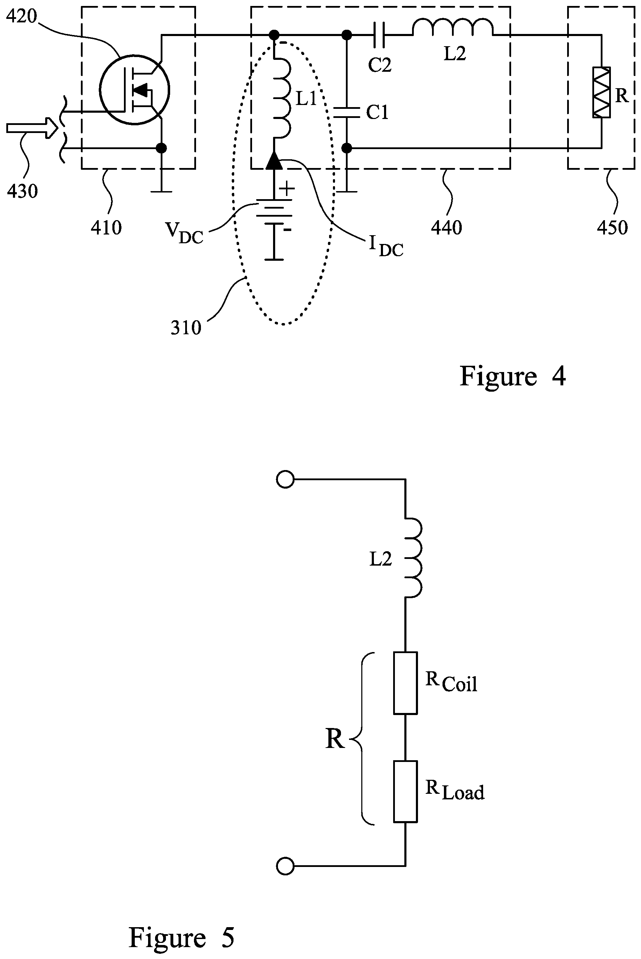

Figure 4 schematically illustrates the electrical components of the inductive heating device 230, in particular the DC/AC converter 340. The DC/AC converter 340 preferably comprises a Class-E power amplifier. The Class-E power amplifier comprises a transistor switch 410 comprising a Field Effect Transistor 420, for example a Metal-Oxide- Semiconductor Field Effect Transistor, a transistor switch supply circuit indicated by the arrow 430 for supplying a switching signal (gate-source voltage) to the Field Effect Transistor 420, and an LC load network 440 comprising a shunt capacitor C1 and a series connection of a capacitor C2 and inductor L2, corresponding to inductor 240. In addition, the DC power source 310, comprising a choke L1, is shown for supplying the DC supply voltage VDC, with a DC current IDC being drawn from the DC power source 310 during operation. The ohmic resistance R representing the total ohmic load 450, which is the sum of the ohmic resistance Rcoil of the inductor L2 and the ohmic resistance Rload of the susceptor 44, is shown in more detail in Figure 5.

Although the DC/AC converter 340 is illustrated as comprising a Class-E power amplifier, it is to be understood that the DC/AC converter 340 may use any suitable circuitry that converts DC current to AC current. For example, the DC/AC converter 340 may comprise a class-D power amplifier comprising two transistor switches. As another example, the DC/AC converter 340 may comprise a full bridge power inverter with four switching transistors acting in pairs.

Turning back to Figure 3, the inductor 240 may receive the alternating current from the DC/AC converter 340 via a matching network 350 for optimum adaptation to the load, but the matching network 350 is not essential. The matching network 350 may comprise a small matching transformer. The matching network 350 may improve power transfer efficiency between the DC/AC converter 340 and the inductor 240.

As illustrated in Figure 2A, the inductor 240 is located adjacent to the distal portion 225 of the cavity 220 of the aerosol-generating device 200. Accordingly, the high frequency alternating current supplied to the inductor 240 during operation of the aerosol-generating device 200 causes the inductor 240 to generate a high frequency alternating magnetic field within the distal portion 225 of the aerosol-generating device 200. The alternating magnetic field preferably has a frequency of between 1 and 30 megahertz, preferably between 2 and 10 megahertz, for example between 5 and 7 megahertz. As can be seen from Figure 2B, when an aerosol-generating article 100 is inserted into the cavity 200, the aerosol-forming substrate 12 of the aerosol-generating article 100 is located adjacent to the inductor 240 so that the susceptor 44 of the aerosol-generating article 100 is located within this alternating magnetic field. When the alternating magnetic field penetrates the susceptor 44, the alternating magnetic field causes heating of the susceptor 44. For example, eddy currents are generated in the susceptor 44 which is heated as a result. Further heating is provided by magnetic hysteresis losses within the susceptor 44. The heated susceptor 44 heats the aerosol-forming substrate 12 of the aerosol-generating article 100 to a sufficient temperature to form an aerosol. The aerosol is drawn downstream through the aerosol-generating article 100 and inhaled by the user.

The controller 330 may be a microcontroller, preferably a programmable microcontroller. The controller 330 is programmed to regulate the supply of power from the DC power source 310 to the inductive heating arrangement 320 in order to control the temperature of the susceptor 44. The controller may receive an input from a puff sensor 360, as will be described.

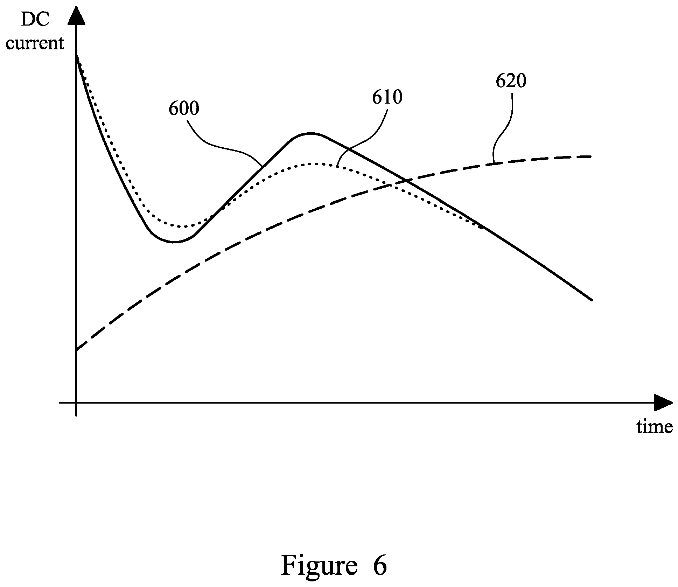

Figure 6 illustrates the relationship between the DC current IDC drawn from the power source 310 over time as the temperature of the susceptor 44 (the temperature is indicated by the dashed line 620) increases. The DC current is shown as line 600. The DC current IDC drawn from the power source 310 is measured at an input side of the DC/AC converter 340.

For the purpose of this illustration, it may be assumed that the voltage VDC of the power source 310 remains approximately constant. As the susceptor 44 is inductively heated, the apparent resistance of the susceptor 44 increases. This increase in resistance is observed as a decrease in the DC current IDC drawn from the power source 310, which at constant voltage decreases as the temperature of the susceptor 44 increases. The high frequency alternating magnetic field provided by the inductor 240 induces eddy currents in close proximity to the susceptor surface, an effect that is known as the skin effect. The resistance in the susceptor 44 depends in part on the electrical resistivity of the first susceptor material, the resistivity of the second susceptor material and in part on the depth of the skin layer in each material available for induced eddy currents, and the resistivity is in turn temperature dependent. As the second susceptor material reaches its Curie temperature, it loses its magnetic properties. This causes an increase in the skin layer available for eddy currents in the second susceptor material, which causes a decrease in the apparent resistance of the susceptor 44. The result is a temporary increase in the detected DC current IDC when the skin depth of the second susceptor material begins to increase, the resistance begins to fall.

This is seen as the valley (the local minimum) in Figure 6. The current continues to increase until the maximum skin depth is reached, which coincides with the point where the second susceptor material has lost its spontaneous magnetic properties. This point is called the Curie temperature and is seen as the hill (the local maximum) in Figure 6. At this point the second susceptor material has undergone a phase change from a ferromagnetic or ferri-magnetic state to a paramagnetic state.

At this point, the susceptor 44 is at a known temperature (the Curie temperature, which is an intrinsic material-specific temperature). If the inductor 240 continues to generate an alternating magnetic field (i.e. power to the DC/AC converter 340 is not interrupted) after the Curie temperature has been reached, the eddy currents generated in the susceptor 44 will run against the resistance of the susceptor 44, whereby Joule heating in the susceptor 44 will continue, and thereby the resistance will increase again (the resistance will have a polynomial dependence of the temperature, which for most metallic susceptor materials can be approximated to a third degree polynomial dependence for our purposes) and current will start falling again as long as the inductor 240 continues to provide power to the susceptor 44.

Therefore, as can be seen from Figure 6, the apparent resistance of the susceptor 44 (and correspondingly the current IDC drawn from the power source 310) may vary with the temperature of the susceptor 44 in a strictly monotonic relationship over certain ranges of temperature of the susceptor 44. The strictly monotonic relationship allows for an unambiguous determination of the temperature of the susceptor 44 from a determination of the apparent resistance or apparent conductance (1/R). This is because each determined value of the apparent resistance is representative of only one single value of the temperature, so that there is no ambiguity in the relationship. The monotonic relationship of the temperature of the susceptor 44 and the apparent resistance allows for the determination and control of the temperature of the susceptor 44 and thus for the determination and control of the temperature of the aerosol-forming substrate 12. The apparent resistance of the susceptor 44 can be remotely detected by monitoring at least the DC current IDC drawn from the DC power source 310.

At least the DC current IDC drawn from the power source 310 is monitored by the controller 330. Preferably, both the DC current IDC drawn from the power source 310 and the DC supply voltage VDC are monitored. The controller 330 regulates the supply of power provided to the heating arrangement 320 based on a conductance value or a resistance value, where conductance is defined as the ratio of the DC current IDC to the DC supply voltage VDC and resistance is defined as the ratio of the DC supply voltage VDC to the DC current IDC. The heating arrangement 320 may comprise a current sensor (not shown) to measure the DC current IDC. The heating arrangement may optionally comprise a voltage sensor (not shown) to measure the DC supply voltage VDC. The current sensor and the voltage sensor are located at an input side of the DC/AC converter 340. The DC current IDC and optionally the DC supply voltage VDC are provided by feedback channels to the controller 330 to control the further supply of AC power PAC to the inductor 240.

The controller 330 may control the temperature of the susceptor 44 by maintaining the measured conductance value or the measured resistance value at a target value corresponding to a target operating temperature of the susceptor 44. The controller 330 may use any suitable control loop to maintain the measured conductance value or the measured resistance value at the target value, for example by using a proportional-integral-derivative control loop.

In order to take advantage of the strictly monotonic relationship between the apparent resistance (or apparent conductance) of the susceptor 44 and the temperature of the susceptor 44, during user operation for producing an aerosol, the conductance value or the resistance value associated with the susceptor and measured at the input side of the DC/AC converter 340 is maintained between a first calibration value corresponding to a first calibration temperature and a second calibration value corresponding to a second calibration temperature. The second calibration temperature is the Curie temperature of the second susceptor material (the hill in the current plot in Fig. 6). The first calibration temperature is a temperature greater than or equal to the temperature of the susceptor at which the skin depth of the second susceptor material begins to increase (leading to a temporary lowering of the resistance). Thus, the first calibration temperature is a temperature greater than or equal to the temperature at maximum permeability of the second susceptor material. The first calibration temperature is at least 50 degrees Celsius lower than the second calibration temperature. At least the second calibration value may be determined by calibration of the susceptor 44, as will be described in more detail below. The first calibration value and the second calibration value may be stored as calibration values in a memory of the controller 330.

Since the conductance (resistance) will have a polynomial dependence on the temperature, the conductance (resistance) will behave in a nonlinear manner as a function of temperature. However, the first and second calibration values are chosen so that this dependence may be approximated as being linear between the first calibration value and the second calibration value because the difference between the first and the second calibration values is small, and the first and the second calibration values are in the upper part of the operational temperature range. Therefore, to adjust the temperature to a target operating temperature, the conductance is regulated according to the first calibration value and the second calibration value, through linear equations. For example, if the first and the second calibration values are conductance values, the target conductance value corresponding to the target operating temperature may be given by:

$$G_{Target} = G_{lower} + (x \times \Delta G)$$

where $\Delta G$ is the difference between the first conductance value and the second conductance value and $x$ is a percentage of $\Delta G$.

The controller 330 may control the provision of power to the heating arrangement 320 by adjusting the duty cycle of the switching transistor 410 of the DC/AC converter 340. For example, during heating, the DC/AC converter 340 continuously generates alternating current that heats the susceptor 44, and simultaneously the DC supply voltage VDC and the DC current IDC may be measured, preferably every millisecond for a period of 100 milliseconds. If the conductance is monitored by the controller 330, when the conductance reaches or exceeds a value corresponding to the target operating temperature, the duty cycle of the switching transistor 410 is reduced. If the resistance is monitored by the controller 330, when the resistance reaches or goes below a value corresponding to the target operating temperature, the duty cycle of the switching transistor 410 is reduced. For example, the duty cycle of the switching transistor 410 may be reduced to about 9%. In other words, the switching transistor 410 may be switched to a mode in which it generates pulses only every 10 milliseconds for a duration of 1 millisecond. During this 1 millisecond on-state (conductive state) of the switching transistor 410, the values of the DC supply voltage VDC and of the DC current IDC are measured and the conductance is determined. As the conductance decreases (or the resistance increases) to indicate that the temperature of the susceptor 44 is below the target operating temperature, the gate of the transistor 410 is again supplied with the train of pulses at the chosen drive frequency for the system.

The power may be supplied by the controller 330 to the inductor 240 in the form of a series of successive pulses of electrical current. In particular, power may be supplied to the inductor 240 in a series of pulses, each separated by a time interval. The series of successive pulses may comprise two or more heating pulses and one or more probing pulses between successive heating pulses. The heating pulses have an intensity such as to heat the susceptor 44. The probing pulses are isolated power pulses having an intensity such not to heat the susceptor 44 but rather to obtain a feedback on the conductance value or resistance value and then on the evolution (decreasing) of the susceptor temperature. The controller 330 may control the power by controlling the duration of the time interval between successive heating pulses of power supplied by the DC power supply to the inductor 240. Additionally or alternatively, the controller 330 may control the power by controlling the length (in other words, the duration) of each of the successive heating pulses of power supplied by the DC power supply to the inductor 240.

The controller 330 is programmed to perform a calibration process in order to obtain the calibration values at which the conductance is measured at known temperatures of the susceptor 44. The known temperatures of the susceptor may be the first calibration temperature corresponding to the first calibration value and the second calibration temperature corresponding to the second calibration value. Preferably, the calibration process is performed each time the user operates the aerosol-generating device 200, for example each time the user inserts an aerosol-generating article 100 into an aerosol- generating device 200.

During the calibration process, the controller 330 controls the DC/AC converter 340 to continuously or continually supply power to the inductor 240 in order to heat the susceptor 44. The controller 330 monitors the conductance or resistance associated with the susceptor 44 by measuring the current IDC drawn by the power supply and, optionally the power supply voltage VDC. As discussed above in relation to Figure 6, as the susceptor 44 is heated, the measured current decreases until a first turning point is reached and the current begins to increase. This first turning point corresponds to a local minimum conductance value (a local maximum resistance value). The controller 330 may record the local minimum value of conductance (or local maximum of resistance) as the first calibration value. The controller may record the value of conductance or resistance at a predetermined time after the minimum current has been reached as the first calibration value. The conductance or resistance may be determined based on the measured current IDC and the measured voltage VDC. Alternatively, it may be assumed that the power supply voltage VDC, which is a known property of the power source 310, is approximately constant. The temperature of the susceptor 44 at the first calibration value is referred to as the first calibration temperature.

Preferably, the first calibration temperature is between 150 degrees Celsius and 350 degrees Celsius. More preferably, when the aerosol-forming substrate 12 comprises tobacco, the first calibration temperature is 320 degrees Celsius. The first calibration temperature is at least 50 degrees Celsius lower than the second calibration temperature.

As the controller 330 continues to control the power provided by the DC/AC converter 340 to the inductor 240, the measured current increases until a second turning point is reached and a maximum current is observed (corresponding to the Curie temperature of the second susceptor material) before the measured current begins to decrease. This turning point corresponds to a local maximum conductance value (a local minimum resistance value). The controller 330 records the local maximum value of the conductance (or local minimum of resistance) as the second calibration value. The temperature of the susceptor 44 at the second calibration value is referred to as the second calibration temperature. Preferably, the second calibration temperature is between 200 degrees Celsius and 400 degrees Celsius. When the maximum is detected, the controller 330 controls the DC/AC converter 340 to interrupt provision of power to the inductor 240, resulting in a decrease in susceptor 44 temperature and a corresponding decrease in conductance.

Due to the shape of the graph, this process of continuously heating the susceptor 44 to obtain the first calibration value and the second calibration value may be repeated at least once. After interrupting provision of power to the inductor 240, the controller 330 continues to monitor the conductance (or resistance) until a third turning point corresponding to a second minimum conductance value (a second maximum resistance value) is observed. When the third turning point is detected, the controller 330 controls the DC/AC converter 340 to continuously provide power to the inductor 240 until a fourth turning point corresponding to a second maximum conductance value (second minimum resistance value) is detected. The controller 330 stores the conductance value or the resistance value at or just after the third turning point as the first calibration value and the conductance value or the resistance value at the fourth turning point current as the second calibration value. The repetition of the measurement of the turning points corresponding to minimum and maximum measured current significantly improves the subsequent temperature regulation during user operation of the device for producing an aerosol. Preferably, controller 330 regulates the power based on the conductance or resistance values obtained from the second maximum and the second minimum, this being more reliable because the heat will have had more time to distribute within the aerosol-forming substrate 12 and the susceptor 44.

In order to further improve the reliability of the calibration process, the controller 310 may be optionally programmed to perform a pre-heating process before the calibration process. For example, if the aerosol-forming substrate 12 is particularly dry or in similar conditions, the calibration may be performed before heat has spread within the aerosol- forming substrate 12, reducing the reliability of the calibration values. If the aerosol-forming substrate 12 were humid, the susceptor 44 takes more time to reach the valley temperature (due to water content in the substrate 12).

To perform the pre-heating process, the controller 330 is configured to continuously provide power to the inductor 240. As described above, the current starts decreasing with increasing susceptor 44 temperature until the minimum is reached. At this stage, the controller 330 is configured to wait for a predetermined period of time to allow the susceptor 44 to cool before continuing heating. The controller 330 therefore controls the DC/AC converter 340 to interrupt provision of power to the inductor 240. After the predetermined period of time, the controller 330 controls the DC/AC converter 340 to provide power until the minimum is reached. At this point, the controller controls the DC/AC converter 340 to interrupt provision of power to the inductor 240 again. The controller 330 again waits for the same predetermined period of time to allow the susceptor 44 to cool before continuing heating. This heating and cooling of the susceptor 44 is repeated for the predetermined duration of time of the pre-heating process. The predetermined duration of the pre-heating process is preferably 11 seconds. The predetermined combined durations of the pre-heating process followed by the calibration process is preferably 20 seconds.

If the aerosol-forming substrate 12 is dry, the first minimum of the pre-heating process is reached within the pre-determined period of time and the interruption of power will be repeated until the end of the predetermined time period. If the aerosol-forming substrate 12 is humid, the first minimum of the pre-heating process will be reached towards the end of the pre-determined time period. Therefore, performing the pre-heating process for a predetermined duration ensures that, whatever the physical condition of the substrate 12, the time is sufficient for the substrate 12 to reach the minimum temperature, in order to be ready to feed continuous power and reach the first maximum. This allows a calibration as early as possible, but still without risking that the substrate 12 would not have reached the valley beforehand.

Further, the aerosol-generating article 100 may be configured such that the minimum is always reached within the predetermined duration of the pre-heating process. If the minimum is not reached within the predetermined duration of the pre-heating process, this may indicate that the aerosol-generating article 100 comprising the aerosol-forming substrate 12 is not suitable for use with the aerosol-generating device 200. For example, the aerosol- generating article 100 may comprise a different or lower-quality aerosol-forming substrate 12 than the aerosol-forming substrate 100 intended for use with the aerosol-generating device 200. As another example, the aerosol-generating article 100 may not be configured for use with the heating arrangement 320, for example if the aerosol-generating article 100 and the aerosol-generating device 200 are manufactured by different manufacturers. Thus, the controller 330 may be configured to generate a control signal to cease operation of the aerosol-generating device 200.

The pre-heating process may be performed in response to receiving a user input, for example user activation of the aerosol-generating device 200. Additionally or alternatively, the controller 330 may be configured to detect the presence of an aerosol-generating article 100 in the aerosol-generating device 200 and the pre-heating process may be performed in response to detecting the presence of the aerosol-generating article 100 within the cavity 220 of the aerosol-generating device 200.

Following the pre-heating process and the calibration process, the controller 330 controls the DC/AC converter 340 to maintain the conductance or resistance associated with the susceptor 44 at a target value. This is referred to as the heating process. The target value may change over time in a continuous or step-wise manner but will always be between the maximum and minimum values determined during the calibration process. A recalibration process may be performed at set time intervals during the heating process in order to re- establish the maximum and minimum values, which may drift over a period of use of the device.

In order to maintain the conductance or resistance associated with the susceptor 44 at the target value, controller 330 varies the duty cycle of the DC/AC converter 340. If the susceptor is cooled by an increased airflow past the susceptor, such as during a user puff on the system, the conductance associated with the susceptor will fall. The controller 330 will then increase the duty cycle of the pulses of current to increase the power provided to the inductor and thereby bring the conductance of the susceptor back towards the target value.

In order to prevent overheating of the device or the susceptor during operation one or more safety processes may be implemented. One safety process is implemented when a cooling event, such a user puff, is detected. Experiments have shown that, during an event that cools the susceptor, such as a user puff, the S-shaped curve shown in Figure 6 undergoes a compression so that the local minimum of DC current (or conductance) has a higher value and the local maximum of DC current at the Curie temperature is reduced. The shape of the curve during a use puff is illustrated schematically in dotted line 610 in Figure 6.

This flattening of the curve shown in Figure 6 means that the normal control process might lead to overheating. For example, if a cooling event, such as a user puff, occurs when the target conductance is close to the local maximum conductance established during the calibration process, it may be that the target conductance is not actually achievable. In that circumstance there is a risk that the controller will continue to increase the duty cycle of the pulses of electrical current to the point that the susceptor is overheated, i.e. is heated to a temperature which provides an undesirable aerosol.

To reduce the possibility of overheating of the susceptor, the controller introduces a duty cycle limit during a cooling event, such as a user puff. For example, during a steady state before a user puff, a 30% duty cycle may be needed to maintain the target conductance. When the susceptor is cooled the controller might need to increase the duty cycle to 50% to maintain the target conductance. However, the controller may introduce a duty cycle limit of less than 50% to prevent overheating. This means that the susceptor may not reach the target temperature during the puff, but preventing overheating is more important than preventing a marginal under heating.

In this example, the duty cycle limit is calculated as a 10% increase on the average duty cycle occurring in the 6.4 seconds before the onset of the user puff. The calculation of the duty cycle limit may be changed depending on the time that has elapsed since the device was activated or the number of puffs that have been taken since the device was activated.

For example, for the first two puffs, the duty cycle limit may be calculated as the average duty cycle occurring in the 6.4 seconds before the onset of the user puff plus 20%. For the next 6 puffs, the duty cycle may be calculated as the average duty cycle occurring in the 6.4 seconds before the onset of the user puff plus 10%. For any further puffs, the duty cycle may be calculated as the average duty cycle occurring in the 6.4 seconds before the onset of the user puff plus 5%. Other ways of limiting the duty cycle increase during a puff can be used, including fixed duty cycle limits stored in memory.

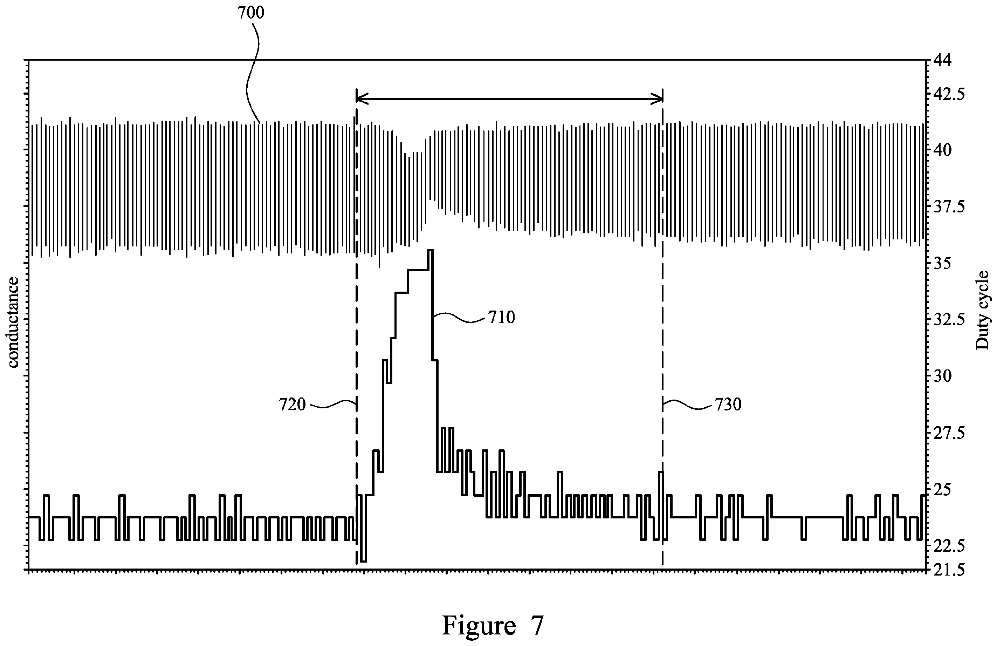

Figure 7 illustrates this behavior of the controller. The upper line 700 is the conductance associated with the susceptor versus time. Prior to a user puff the conductance is steady. At the onset of the user puff, indicated as point 720, the conductance begins to fall as the susceptor is cooled. The controller detects this drop in conductance and increases the duty cycle of the current to raise the conductance. The duty cycle over time is shown as the lower line 710. However, the duty cycle increase is not sufficient to fully compensate for the cooling effect of the user puff. For a period of time the conductance falls below the target value before it starts to rise again back to a conductance corresponding to the target temperature for the heating process. This local minimum of conductance is the direct result of the duty cycle limit calculated and implemented by the controller. If the duty cycle were boosted to fully compensate for the cooling effect of the puff, there would be no fall in conductance below the target value.

In this embodiment, the start of the puff is detected by reading a signal from a dedicated puff sensor 360. In this embodiment, the puff sensor is a thermistor. The thermistor is positioned at the distal end of the cavity 220. A signals from the thermistor can be used to determine the onset of a puff or other cooling event and the end of the puff or cooling event.

As an alternative, the controller may determine the end of the user puff to be a fixed time after the onset of the puff, say 4 seconds.

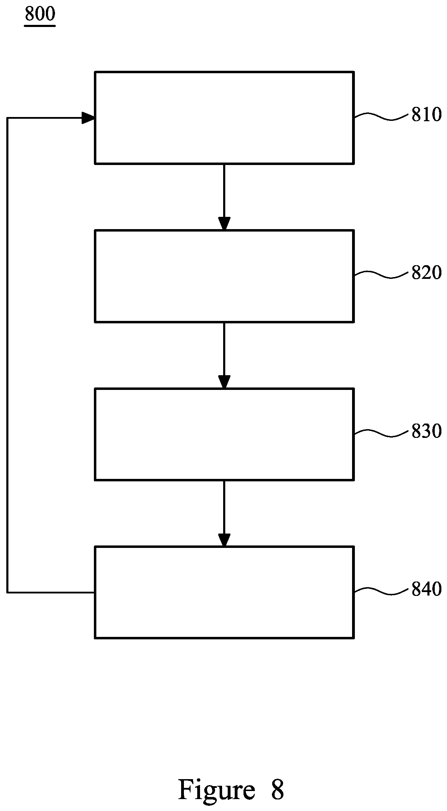

Figure 8 is a flow diagram of a method 800 for limiting the duty cycle of the pulses of current supplied to the inductor in an aerosol-generating device 200. As described above, the controller 330 may be programmed to perform the method 800.

The method begins at step 810, where the controller 330 detects a user puff based on signals from the thermistor, as described above.

In response to detecting the user puff at step 810, the controller 330 is configured to calculate a duty cycle limit to be applied for the duration of the puff. This calculation occurs in step 820 and comprises adding 10% to the average duty cycle used during the preceding 6.4 seconds.

The duty cycle limit is applied by the controller until the end of the user puff is determined in step 830. The end of the user puff is determined based on signals from the thermistor.

When the end of the user puff has been detected the duty cycle limit is removed in step 840. The process is then repeated when the next user puff is detected.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. Within this context, a number A may be considered to include numerical values that are within general standard error for the measurement of the property that the number A modifies. The number A, in some instances as used in the appended claims, may deviate by the percentages enumerated above provided that the amount by which A deviates does not materially affect the basic and novel characteristic(s) of the claimed invention. Also, all ranges include the maximum and minimum points disclosed and include any intermediate ranges therein, which may or may not be specifically enumerated herein.

**Claims**

1. A method of controlling an inductive heating arrangement (320), the inductive heating arrangement comprising an inductor (240) and a susceptor (44) coupled to the inductor (240) so that the provision of an alternating electrical current to the inductor (240) causes heating of the susceptor (44), the method comprising:

   providing pulses of electrical current to the at least one inductor (240) to maintain a conductance or resistance associated with the susceptor (44) at a target conductance or resistance;
   detecting a cooling event associated with the susceptor (44);
   determining a maximum duty cycle limit for the pulses of electrical current for a duration of the cooling event; and
   increasing a duty cycle of the pulses of electrical current for the duration of the detected cooling event, to compensate for the detected cooling event, to a duty cycle at or below the maximum duty cycle limit.

2. A method according to claim 1, wherein determining a maximum duty cycle limit comprises calculating the maximum duty cycle limit, preferably based on an average duty cycle during a period preceding the cooling event.

3. A method according to claim 2, wherein the maximum duty cycle limit is calculated as an increase on the average duty cycle during the period immediately preceding the cooling event.

4. A method according to claim 3, wherein the increase is a fixed increase between 3% and 30%, and is preferably 10%.

5. A method according to any one of claims 2 to 4, wherein the period preceding the cooling event is a period of between 2 and 10 seconds preceding the cooling event.

6. A method according to any one of the preceding claims, wherein the maximum duty cycle limit is based on a time since the heating arrangement was activated.

7. A method according to any one of the preceding claims, wherein the target conductance or resistance corresponds to a susceptor temperature no greater than a Curie temperature of material in the susceptor (44).

8. A method according to any preceding claim wherein the susceptor (44) comprises a first susceptor material having a first Curie temperature and second susceptor material and a second Curie temperature, wherein the second Curie temperature is lower than the first Curie temperature, and wherein the target conductance or resistance corresponds to a susceptor temperature no greater than the second Curie temperature.

9. A method according to any one of the preceding claims, wherein detecting a cooling event comprises detecting an airflow past or through the susceptor (44).

10. A method according to any one of the preceding claims, wherein the inductive heating arrangement (320) is part of an aerosol-generating system in which the susceptor (44) is used to heat an aerosol-forming substrate (12).

11. An inductive heating system comprising:

a power source (310);
an inductive heating arrangement (320) comprising a susceptor (44) and at least one inductor (240) coupled to the susceptor (44) so that the provision of an alternating electrical current to the inductor causes heating of the susceptor (44); and
a controller (330) configured to:

determine a conductance or resistance associated with the susceptor (44) and to supply pulses of electrical current to the inductor from the power source (310) to maintain a conductance or resistance associated with the susceptor (44) at a target conductance or resistance;

Detect a cooling event associated with the susceptor (44); and
increase a duty cycle of the pulses of electrical current to compensate for the detected cooling event, wherein the controller (330) is configured to limit the duty cycle of the pulses of electrical current to be at or below a maximum duty cycle limit for the duration of the detected cooling event.

12. An inductive heating system according to claim 11, wherein the controller (330) is configured to calculate the maximum duty cycle limit, preferably based on an average duty cycle during a period preceding the cooling event.

13. An inductive heating system according to claim 12, wherein the controller (330) is configured to calculate the maximum duty cycle limit as an increase on the average duty cycle during the period immediately preceding the cooling event.

14. An inductive heating system according to any one of claims 12 to 13, wherein the period preceding the cooling event is a period of between 2 and 10 seconds preceding the cooling event.

15. An aerosol generating device (200) comprising an inductive heating system according to claim 11.

**Patentansprüche**

1. Verfahren zum Regeln einer induktiven Heizanordnung (320), wobei die induktive Heizanordnung einen Induktor (240) und einen Suszeptor (44) umfasst, der mit dem Induktor (240) gekoppelt ist, sodass das Bereitstellen eines elektrischen Wechselstroms an den Induktor (240) das Erwärmen des Suszeptors (44) bewirkt, wobei das Verfahren Folgendes umfasst:

Bereitstellen von elektrischen Stromimpulsen an die wenigstens eine Induktivität (240), um einen dem Suszeptor (44) zugewiesenen Leitwert oder Widerstand auf einem Zielleitwert oder Widerstand zu halten;
Detektieren eines dem Suszeptor (44) zugewiesenen Kühlereignisses;
Bestimmen einer maximalen Einschaltdauergrenze für die elektrischen Stromimpulse für eine Dauer des Kühlereignisses; und
Erhöhen einer relativen Einschaltdauer der elektrischen Stromimpulse für die Dauer des detektierten Kühlvorgangs, um den detektierten Kühlvorgang auf eine relative Einschaltdauer bei oder unter der maximalen Einschaltdauergrenze zu kompensieren.

**2.** Verfahren nach Anspruch 1, wobei das Bestimmen einer maximalen Einschaltdauergrenze das Berechnen der maximalen Einschaltdauergrenze, vorzugsweise basierend auf einer mittleren relativen Einschaltdauer während einer dem Kühlereignis vorangehenden Periode, umfasst.

**3.** Verfahren nach Anspruch 2, wobei die maximale Einschaltdauergrenze als eine Erhöhung der mittleren relativen Einschaltdauer während der dem Kühlereignis unmittelbar vorausgehenden Periode berechnet wird.

**4.** Verfahren nach Anspruch 3, wobei die Erhöhung eine feste Zunahme zwischen 3 % und 30 % ist und vorzugsweise 10 % beträgt.

**5.** Verfahren nach einem der Ansprüche 2 bis 4, wobei die dem Abkühlvorgang vorausgehende Periode eine Zeit zwischen 2 und 10 Sekunden vor dem Abkühlvorgang ist.

**6.** Verfahren nach einem der vorhergehenden Ansprüche, wobei die maximale Einschaltdauergrenze auf der Zeit seit der Aktivierung der Heizanordnung basiert.

**7.** Verfahren nach einem der vorhergehenden Ansprüche, wobei der Zielleitwert oder der Widerstand einer Suszeptortemperatur entspricht, die nicht größer als eine Curie-Temperatur des Materials in dem Suszeptor (44) ist.

**8.** Verfahren nach einem beliebigen der vorgergehenden Ansprüche, wobei der Suszeptor (44) ein erstes Suszeptormaterial mit einer ersten Curie-Temperatur und ein zweites Suszeptormaterial mit einer zweiten Curie-Temperatur umfasst, wobei die zweite Curie-Temperatur niedriger ist als die erste Curie-Temperatur und wobei die Zielleitfähigkeit oder der Zielwiderstand einer Suszeptortemperatur entspricht, die nicht höher ist als die zweite Curie-Temperatur.

**9.** Verfahren nach einem der vorhergehenden Ansprüche, wobei das Erfassen eines Kühlvorgangs das Erfassen eines Luftstroms am oder durch den Suszeptor (44) umfasst.

**10.** Verfahren nach einem der vorhergehenden Ansprüche, wobei die induktive Heizanordnung (320) Teil eines Aerosolerzeugungssystems ist, in dem der Suszeptor (44) zum Erwärmen eines aerosolerzeugenden Substrats (12) verwendet wird.

**11.** Induktives Heizsystem, umfassend: eine Energiequelle (310); eine induktive Heizanordnung (320), die einen Suszeptor (44) und wenigstens einen Induktor (240) umfasst, der mit dem Suszeptor (44) gekoppelt ist, so dass die Bereitstellung eines elektrischen Wechselstroms an den Induktor eine Erwärmung des Suszeptors (44) bewirkt; und
ein Regler (330), ausgelegt zum:

> Bestimmen eines Leitwerts oder Widerstands, der dem Suszeptor (44) zugewiesen ist, und Zuführen von elektrischen Stromimpulsen zu dem Induktor von der Energiequelle (310), um einen Leitwert oder Widerstand, der mit dem Suszeptor (44) verbunden ist, auf einem Zielleitwert oder -widerstand zu halten;
> Detektieren eines dem Suszeptor (44) zugewiesenen Kühlereignisses; und
> Erhöhen der relativen Einschaltdauer der elektrischen Stromimpulse, um das erkannte Kühlungsereignis zu kompensieren, wobei der Regler (330) so konfiguriert ist, dass dieser die relative Einschaltdauer der elektrischen Stromimpulse so begrenzt, dass diese für die Dauer des detektierten Kühlungsereignisses bei oder unter einer maximalen Einschaltdauergrenze liegen.

**12.** Induktives Heizsystem nach Anspruch 11, wobei der Regler (330) zur Berechnung der maximalen Einschaltdauergrenze konfiguriert ist, vorzugsweise basierend auf einer mittleren relativen Einschaltdauer während einer Periode, die dem Kühlereignis vorangeht.

**13.** Induktives Heizsystem nach Anspruch 12, wobei der Regler (330) so konfiguriert ist, dass dieser die maximale Einschaltdauergrenze als eine Erhöhung der mittleren relativen Einschaltdauer während der dem Kühlereignis unmittelbar vorausgehenden Periode berechnet.

**14.** Induktives Heizsystem nach einem der Ansprüche 12 bis 13, wobei die dem Abkühlvorgang vorausgehende Periode eine dem Abkühlvorgang vorausgehende Periode zwischen 2 und 10 Sekunden ist.

**15.** Eine Aerosolerzeugungsvorrichtung (200), die ein induktives Heizsystem nach Anspruch 11 umfasst.

## Revendications

**1.** Procédé de commande d'un agencement de chauffage par induction (320), l'agencement de chauffage par induction comprenant une inductance (240) et un suscepteur (44) couplé à l'inductance (240) de sorte que la fourniture d'un courant électrique alternatif vers l'inductance (240) provoque le chauffage du suscepteur (44), le procédé comprenant :

> la fourniture d'impulsions de courant électrique à l'au moins une inductance (240) pour maintenir une conductance ou résistance associée au suscepteur (44) à une conductance ou résistance cible ;

la détection d'un événement de refroidissement associé au suscepteur (44) ;

la détermination d'une limite de cycle opératoire maximale pour les impulsions de courant électrique pendant une durée de l'événement de refroidissement ; et

l'augmentation d'un cycle opératoire des impulsions de courant électrique pour la durée de l'événement de refroidissement détecté, pour compenser l'événement de refroidissement détecté, à un cycle opératoire à ou en dessous de la limite de cycle opératoire maximale.

2. Procédé selon la revendication 1, dans lequel la détermination d'une limite de cycle opératoire maximale comprend le calcul de la limite de cycle opératoire maximale, de préférence sur la base d'un cycle opératoire moyen pendant une période précédant l'événement de refroidissement.

3. Procédé selon la revendication 2, dans lequel la limite de cycle opératoire maximale est calculée comme une augmentation du cycle opératoire moyen pendant la période précédant immédiatement l'événement de refroidissement.

4. Procédé selon la revendication 3, dans lequel l'augmentation est une augmentation fixe entre 3 % et 30 %, et est de préférence de 10 %.

5. Procédé selon l'une quelconque des revendications 2 à 4, dans lequel la période précédant l'événement de refroidissement est une période d'entre 2 et 10 secondes précédant l'événement de refroidissement.

6. Procédé selon l'une quelconque des revendications précédentes, dans lequel la limite de cycle opératoire maximale est basée sur un temps depuis que l'agencement de chauffage a été activé.

7. Procédé selon l'une quelconque des revendications précédentes, dans lequel la conductance ou résistance cible correspond à une température de suscepteur qui n'est pas supérieure à une température de Curie du matériau dans le suscepteur (44).

8. Procédé selon l'une quelconque des revendications précédentes, dans lequel le suscepteur (44) comprend un premier matériau suscepteur ayant une première température de Curie et un deuxième matériau suscepteur ayant une deuxième température de Curie, dans lequel la deuxième température de Curie est inférieure à la première température de Curie, et dans lequel la conductance ou résistance cible correspond à la une température de suscepteur non supérieure à la deuxième température de Curie.

9. Procédé selon l'une quelconque des revendications précédentes, dans lequel la détection d'un événement de refroidissement comprend la détection d'un écoulement d'air devant ou à travers le suscepteur (44).

10. Procédé selon l'une quelconque des revendications précédentes, dans lequel l'agencement de chauffage par induction (320) fait partie d'un système de génération d'aérosol dans lequel le suscepteur (44) est utilisé pour chauffer un substrat formant aérosol (12).

11. Système de chauffage par induction comprenant :
une source de puissance (310) ;

un agencement de chauffage par induction (320) comprenant un suscepteur (44) et au moins une inductance (240) couplée au suscepteur (44) de sorte que la fourniture d'un courant électrique alternatif à l'inductance provoque le chauffage du suscepteur (44) ; et
un dispositif de commande (330) configuré pour :

déterminer une conductance ou résistance associée au suscepteur (44) et alimenter des impulsions de courant électrique vers l'inductance à partir de la source de puissance (310) pour maintenir une conductance ou résistance associée au suscepteur (44) à une conductance ou résistance cible ;

détecter un événement de refroidissement associé au suscepteur (44) ; et

augmenter un cycle opératoire des impulsions de courant électrique pour compenser l'événement de refroidissement détecté, dans lequel le dispositif de commande (330) est configuré pour limiter le cycle opératoire des impulsions de courant électrique pour être à ou en dessous d'une limite de cycle opératoire maximale pour la durée de l'événement de refroidissement détecté.

12. Système de chauffage par induction selon la revendication 11, dans lequel le dispositif de commande (330) est configuré pour calculer la limite de cycle opératoire maximale, de préférence sur la base d'un cycle opératoire moyen pendant une période précédant l'événement de refroidissement.

13. Système de chauffage par induction selon la revendication 12, dans lequel le dispositif de commande (330) est configuré pour calculer la limite de cycle opératoire maximale comme une augmentation du cycle opératoire moyen pendant la période précédant immédiatement l'événement de refroidissement.

14. Système de chauffage par induction selon l'une quelconque des revendications 12 et 13, dans lequel la période précédant l'événement de refroidissement est une période d'entre 2 et 10 secondes précédant l'événement de refroidissement.

15. Dispositif de génération d'aérosol (200) comprenant un système de chauffage par induction selon la revendication 11.

Figure 1

Figure 2A

Figure 2B

Figure 3

Figure 4

Figure 5

Figure 6

Figure 7

EP 4 371 373 B1

800

810

820

830

840

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019069599 A1
- EP 3841899 A1
- US 10470496 B2
- US 9713345 B2
- US 2020154787 A1